# EUROPEAN PATENT APPLICATION

(11) **EP 4 841 380 A1**
(43) Date of publication of application: **18.11.2026**
(21) Application number: 25738576.5
(22) Date of filing: 10.01.2025
(51) Int. Cl.: G05D 1/43

(54) **METHOD FOR SELF-MOVING DEVICE TO LEAVE DOCKING STATION, METHOD FOR SELF-MOVING DEVICE TO RETURN TO DOCKING STATION, AND SELF-MOVING DEVICE**

(30) Priority: 10.01.2024 CN 202410038335
(71) Applicant: Positec Power Tools (Suzhou) Co., Ltd., Suzhou, Jiangsu 215123 (CN)
(72) Inventor: XIA, Lei, Suzhou, Jiangsu 215123 (CN); ZHONG, Yinbiao, Suzhou, Jiangsu 215123 (CN); YUAN, Jun, Suzhou, Jiangsu 215123 (CN); ZHANG, Chuang, Suzhou, Jiangsu 215123 (CN)
(74) Representative: Mishcon de Reya LLP
(86) International application number: PCT/CN2025/071819
(87) International publication number: WO 2025/149049

(57) **Abstract**

The present disclosure provides a method for an autonomous moving device to exit a docking station, a method for the autonomous moving device to return to the docking station, and the autonomous moving device. The method for the autonomous moving device to exit the docking station comprises: in response to an exit command, controlling a moving assembly to rotate at a first steering angle to cause the autonomous moving device to move backward along a first path to leave the docking station; the first path under a current exit command being different from the first path under a previous exit command; and in response to the autonomous moving device moving backward to an end point of the first path, controlling the autonomous moving device to turn and then continue to move. By controlling a path of the autonomous moving device entering and exiting the docking station and by providing a docking station configuration, the autonomous moving device is prevented from repeatedly running over grass in a same area near the docking station to damage a lawn, thereby improving a visual effect of the lawn.

## Description

### TECHNICAL FIELD

The present application relates to the technical field of autonomous moving devices, and in particular, to a method for an autonomous moving device to exit a docking station, a method for the autonomous moving device to return to the docking station, and the autonomous moving device.

### BACKGROUND

With the continuous advancement of computer technology and artificial intelligence technology, automatic working systems similar to intelligent robots have begun to enter people's lives. For example, an autonomous moving device for lawn maintenance is generally compact in size and integrated with a task execution system, a drive system, a battery, and a charging system. The autonomous moving device cruises on a lawn to perform tasks automatically according to a preset program without manual control, and automatically returns to a docking station for charging or docking when charging is required or in other situations such as thunderstorms, and then exits the docking station to continue cruising and mowing. Once such an automatic working system of the lawn maintenance autonomous moving device is set up, no further management effort is required, freeing users from tedious and time-consuming housework such as charging and lawn maintenance. However, with the progress and development of technology, people have increasingly higher requirements for the working quality of high-tech products, and there are some deficiencies in intelligent robots that need further improvement.

During the process of conceiving and forming the present application, the applicant at least found the following problem: since the position of the docking station is fixed, the autonomous moving device always enters and exits the docking station along the same path during work on the lawn, repeatedly running over the same piece of turf. Over time, very obvious wheel tracks are formed near the docking station, and even the grass near the docking station is turned yellow or killed, impairing the aesthetics of the lawn.

### SUMMARY

In a first aspect, to alleviate the above problem, the present application provides a method for an autonomous moving device to exit a docking station, the autonomous moving device comprising a moving assembly, the method comprising:
in response to an exit command, controlling the moving assembly to rotate at a first steering angle to cause the autonomous moving device to move backward along a first path to leave the docking station; the first path under a current exit command being different from the first path under a previous exit command; and
in response to the autonomous moving device moving backward to an end point of the first path, controlling the autonomous moving device to turn and then continue to move.

In a second aspect, to alleviate the above problem, the present application provides a method for an autonomous moving device to exit a docking station, the autonomous moving device comprising a moving assembly, the method comprising:
in response to an exit command, controlling the moving assembly to move backward along a first sub-path of a first path, the first path further comprising a second sub-path, an end point of the first path being an end point of the second sub-path;
in response to the autonomous moving device moving to an end point of the first sub-path, controlling the moving assembly to rotate at a second steering angle to cause the autonomous moving device to move backward along the second sub-path to leave the docking station; and
in response to the autonomous moving device moving to the end point of the first path, controlling the autonomous moving device to turn and then continue to move.

In some embodiments of the present application, the first path is an arc-shaped path having a first radius of curvature, the arc-shaped path being formed by the autonomous moving device moving backward while maintaining the first steering angle.

In some embodiments of the present application, the second sub-path is an arc-shaped path having a second radius of curvature, the arc-shaped path being formed by the autonomous moving device moving backward while maintaining the second steering angle.

In some embodiments of the present application, the controlling the moving assembly to move backward along the first sub-path comprises:
controlling the moving assembly to rotate at a third steering angle to cause the autonomous moving device to move backward along the first sub-path to leave the docking station, wherein the third steering angle is smaller than the second steering angle.

In some embodiments of the present application, the first sub-path is an arc-shaped path having a third radius of curvature, the arc-shaped path being formed by the autonomous moving device moving backward while maintaining the third steering angle.

In some embodiments of the present application, a length of the first path is less than or equal to a product of a backward speed and a backward time threshold.

In some embodiments of the present application, the moving assembly comprises traveling wheels disposed on two sides of a body of the autonomous moving device, and a distance between the end point of the first path under the current exit command and the end point of the first path under the previous exit command is greater than or equal to a wheel width of a traveling wheel located on one side of the body of the autonomous moving device.

In some embodiments of the present application, the docking station comprises a shelter, and when the autonomous moving device is docked at the docking station, the shelter covers the autonomous moving device outside; the shelter comprises at least one side wall and at least one opening through which the autonomous moving device enters and exits the docking station; and a limit value of an angle between the first path and a longitudinal axis direction of the body of the autonomous moving device when the autonomous moving device is docked at the docking station is determined by a width of the body of the autonomous moving device in a lateral axis direction and the at least one side wall of the shelter that restricts movement of the autonomous moving device in the lateral axis direction of the body.

In some embodiments of the present application, the docking station comprises a first ground plate disposed outside the shelter, the first ground plate being disposed on a ground near an opening, and when the autonomous moving device exits the docking station through the opening, the moving assembly runs over the first ground plate.

In some embodiments of the present application, the controlling the autonomous moving device to turn and then continue to move comprises:
acquiring a start point of a target working path of the autonomous moving device;
determining a preset direction according to the end point of the first path and the start point of the target working path;
controlling the autonomous moving device to turn; and
in response to the autonomous moving device facing the preset direction, controlling the autonomous moving device to move toward the start point of the target working path.

In some embodiments of the present application, the controlling the autonomous moving device to turn and then continue to move comprises:
controlling the autonomous moving device to rotate the body; and
in response to the autonomous moving device facing an exit direction of a preset guidance path, controlling the autonomous moving device to move away from the docking station along the preset guidance path or along a path spaced apart from the preset guidance path by a preset distance; a path along which the autonomous moving device moves away from the docking station under the current exit command being different from a path along which the autonomous moving device moves away from the docking station under the previous exit command.

In some embodiments of the present application, a distance between at least a portion of the path along which the autonomous moving device moves away from the docking station under the current exit command and at least a portion of the path along which the autonomous moving device moves away from the docking station under the previous exit command is greater than or equal to the one-side wheel width.

In some embodiments of the present application, the autonomous moving device comprises a positioning device configured to receive position data of the autonomous moving device; the autonomous moving device comprises a storage device storing at least part of position data of the preset guidance path; and
the controlling the autonomous moving device to turn and then continue to move further comprises:
controlling the autonomous moving device to follow a distance of the preset guidance path according to the at least part of the position data of the preset guidance path and the position data of the autonomous moving device received by the positioning device.

In some embodiments of the present application, the docking station comprises a guidance module, the autonomous moving device comprises a sensing device capable of sensing the guidance module, and the preset guidance path is a movement path of the autonomous moving device when the guidance module guides the autonomous moving device to exit the docking station.

In some embodiments of the present application, the guidance module comprises a magnetic strip disposed near the docking station, the sensing device comprises a magnetic signal detection sensor, and the preset guidance path comprises at least one segment of a movement path along which the autonomous moving device senses the magnetic strip through the magnetic signal detection sensor and moves along the magnetic strip.

In a third aspect, to alleviate the above problem, the present application provides a method for an autonomous moving device to return to a docking station, comprising:
in response to a return command, controlling the autonomous moving device to travel to one of return transfer points, the return transfer points comprising a first transfer point and a second transfer point, a line of the first transfer point and the second transfer point forming an angle with a longitudinal axis direction of a body of the autonomous moving device when the autonomous moving device is docked at the docking station;
in response to the autonomous moving device reaching the one of the return transfer points, controlling the autonomous moving device to return along a transfer path to a guidance position of the docking station, the return transfer point being a start point of the transfer path;
in response to the autonomous moving device reaching the guidance position, controlling the autonomous moving device to enter the docking station along a docking path and dock with the docking station, the guidance position being an end point of the transfer path and a start point of the docking path, respectively; and
in response to the autonomous moving device successfully docking with the docking station, controlling the autonomous moving device to be at a docking position.

In some embodiments of the present application, the method further comprises:
controlling the autonomous moving device, based on a first navigation signal, to travel to the return transfer point;
controlling the autonomous moving device, based on the first navigation signal, to return along the transfer path to the guidance position of the docking station; and
controlling the autonomous moving device, based on a second navigation signal, to enter the docking station along the docking path and dock with the docking station;
wherein the first navigation signal is different from the second navigation signal.

In some embodiments of the present application, at least two transfer paths are provided between the first transfer point and the guidance position, the at least two transfer paths having preset curvature radii, and the at least two transfer paths do not overlap with each other.

In some embodiments of the present application, an angle between a line from the first transfer point to the guidance position and an orientation of the autonomous moving device at the docking position is less than 90°.

In some embodiments of the present application, before the controlling the autonomous moving device to travel to one of the return transfer points, the method comprises:
selecting, from the first transfer point and the second transfer point, a point having a consecutive selection count lower than a transfer threshold as the return transfer point.

In some embodiments of the present application, the autonomous moving device further comprises a moving assembly, the moving assembly comprising at least one rear wheel; and the method further comprises:
a distance between the first transfer point and the second transfer point being greater than a wheel width of the rear wheel.

In some embodiments of the present application, the controlling, in response to the autonomous moving device reaching the guidance position, the autonomous moving device to enter the docking station along the docking path and dock with the docking station comprises:
before or after the autonomous moving device reaches the guidance position, controlling the autonomous moving device to adjust a pose along the docking path so that the autonomous moving device enters the docking station in a substantially straight-line movement and docks with the docking station; the docking station comprising a second ground plate disposed near the guidance position, and when the autonomous moving device enters the docking station along the docking path, the autonomous moving device runs over the second ground plate.

In some embodiments of the present application, the autonomous moving device further comprises a moving assembly, the moving assembly comprising at least one rear wheel, and the at least one rear wheel is a traveling wheel located at a rear side of a body of the autonomous moving device when the autonomous moving device returns to the guidance position; and
when the autonomous moving device is at the guidance position, the rear wheel of the autonomous moving device is on the second ground plate.

In some embodiments of the present application, the autonomous moving device further comprises a positioning device configured to receive position data of the autonomous moving device; and a distance from a contour edge of the second ground plate in a direction away from the docking station to the guidance position on a ground is greater than or equal to a distance from the positioning device to the at least one rear wheel on the ground.

In some embodiments of the present application, the docking station comprises a guidance module, the autonomous moving device comprises a sensing device capable of sensing the guidance module, and the docking path is a movement path of the autonomous moving device when the guidance module guides the autonomous moving device to enter the docking station.

In some embodiments of the present application, the guidance module comprises a magnetic strip disposed on a ground, the sensing device comprises a magnetic signal detection sensor, and the docking path comprises at least one segment of a movement path along which the autonomous moving device senses the magnetic strip through the magnetic signal detection sensor and moves along the magnetic strip.

In some embodiments of the present application, a length of the second ground plate is less than or equal to a length of the docking station, and a direction of the length is a direction in which the autonomous moving device enters the docking station.

In some embodiments of the present application, the second ground plate is movably connected to the docking station.

In a fourth aspect, to alleviate the above problem, the present application provides an autonomous moving device, comprising:
a moving assembly configured to drive the autonomous moving device to move on a ground;
a control device configured to, in response to an exit command, control the moving assembly to move backward along a first sub-path of a first path, the first path further comprising a second sub-path, an end point of the first path being an end point of the second sub-path; in response to the autonomous moving device moving to an end point of the first sub-path, control the moving assembly to rotate at a second steering angle to cause the autonomous moving device to move backward along the second sub-path to leave a docking station; in response to the autonomous moving device moving to the end point of the first path, control the autonomous moving device to turn and then continue to move; or configured to: in response to a return command, control the autonomous moving device to travel to one of return transfer points, the return transfer points comprising a first transfer point and a second transfer point, a line of the first transfer point and the second transfer point forming an angle with a longitudinal axis direction of a body of the autonomous moving device when the autonomous moving device is docked at the docking station; in response to the autonomous moving device reaching the one of the return transfer points, control the autonomous moving device to return along a transfer path to a guidance position of the docking station, the return transfer point being a start point of the transfer path; in response to the autonomous moving device reaching the guidance position, control the autonomous moving device to enter the docking station along a docking path and dock with the docking station, the guidance position being an end point of the transfer path and a start point of the docking path, respectively; and in response to the autonomous moving device successfully docking with the docking station, control the autonomous moving device to be docked at the docking station.

In a fifth aspect, to alleviate the above problem, the present application provides a method for an autonomous moving device to exit a station, comprising:
in response to an exit command for the autonomous moving device, acquiring an environmental condition of a docking station;
determining a first preset path planning strategy according to the environmental condition;
planning an exit path according to the first preset path planning strategy, the exit path under a current exit command being different from an exit path under a previous exit command; and controlling the autonomous moving device to exit the station based on the exit path.

Optionally, the autonomous moving device comprises a positioning device configured to receive position data of the autonomous moving device; and the environmental condition comprises that a data quality parameter of the position data of the autonomous moving device is above a preset value or below the preset value.

Optionally, when the environmental condition comprises that the data quality parameter of the position data is above the preset value, the exit path comprises at least one segment of a random path or one of a plurality of preset paths.

Optionally, the docking station comprises a second charging terminal, the autonomous moving device comprises a first charging terminal disposed on a body thereof, and during charging of the autonomous moving device by the docking station, the first charging terminal is docked with the second charging terminal; the first preset path planning strategy comprises controlling the autonomous moving device to exit the station directly via a random path or one of a plurality of preset paths; and an angle between a starting tangent of the random path or the one of the plurality of preset paths and a longitudinal axis of the body of the autonomous moving device when the autonomous moving device is docked at the docking station is limited to a first preset angle range.

Optionally, with the longitudinal axis of the body of the autonomous moving device when the autonomous moving device is docked at the docking station being a 0 reference line, and with a rotation direction away from the docking station being a positive direction, the first preset angle range has a value range of 10°, 240°.

Optionally, the environmental condition comprises that the docking station comprises a fixed facility disposed outside the docking station, and the value range of the first preset angle range varies according to a limitation imposed by the fixed facility on a movement direction of the autonomous moving device.

Optionally, the fixed facility comprises a shelter disposed outside the docking station, the shelter comprising a roof and side walls located on two sides to support the roof; with the longitudinal axis of the body of the autonomous moving device when the autonomous moving device is docked at the docking station being a 0 reference line, and with a rotation direction of a tail of the autonomous moving device away from the docking station being a positive direction, the first preset angle range has a value range of -10°, 10°.

Optionally, the fixed facility comprising the shelter disposed outside the docking station is determined by at least one of the following three manners: detecting the shelter through a non-contact obstacle detection sensor, detecting the shelter through a contact obstacle detection sensor, and determining the shelter through preset shelter information.

Optionally, the docking station comprises a charging station and a guidance module disposed near the charging station; when the environmental condition comprises that the data quality parameter of the position data is below the preset value, the autonomous moving device is controlled to determine its own position according to the guidance module, and the exit path comprises at least one segment of a path located near the guidance module.

Optionally, with the longitudinal axis of the body of the autonomous moving device when the autonomous moving device is docked at the docking station being a 0 reference line, and with a rotation direction away from the docking station being a positive direction, the path located near the guidance module comprises at least one segment of a path, and an angle between a starting tangent of the path and the longitudinal axis of the body of the autonomous moving device when the autonomous moving device is docked at the docking station is limited to -10°, 10°.

Optionally, the path located near the guidance module comprises at least one segment of a path offset from the guidance module by a preset distance.

Optionally, the path located near the guidance module comprises at least one segment of a path along the guidance module for a preset length.

Optionally, a starting path of the exit path is the path along the guidance module for the preset length.

Optionally, a region where the preset length is located is provided with a base plate.

Optionally, the preset distance is greater than a one-side wheel width of the autonomous moving device.

Optionally, the guidance module comprises a magnetic strip, and the autonomous moving device comprises a magnetic signal detection sensor; and the autonomous moving device determines a relative position between the autonomous moving device and the magnetic strip according to a magnetic signal detected by the magnetic signal detection sensor, to determine its own position.

Optionally, the guidance module comprises a magnetic strip, and the autonomous moving device comprises a magnetic signal detection sensor; and the autonomous moving device stores at least part of position data of the magnetic strip, and determines its own position according to the at least part of the position data received by the positioning device and the at least part of the position data of the magnetic strip.

Optionally, the environmental condition comprises that a position of the docking station is inside or outside a working map boundary of the autonomous moving device.

Optionally, the method comprises acquiring a current position of the autonomous moving device, and determining a positional relationship between the autonomous moving device and the working map boundary; and determining whether the position of the docking station is inside or outside the boundary according to the positional relationship.

Optionally, the docking station comprises a charging station and a guidance module disposed near the charging station; when the environmental condition comprises that the position of the docking station is outside the working map boundary of the autonomous moving device, the exit strategy comprises controlling the autonomous moving device to determine its own position according to the guidance module, and to leave the charging station along a first random path, enter the boundary along a second random path, and end exiting along a third random path; wherein: the first random path is a path of moving backward for a random distance; the second random path comprises at least one segment of a path located near the guidance module; and the third random path comprises at least one segment of a path of randomly drawing an arc.

In a sixth aspect, to alleviate the above problem, the present application provides a method for an autonomous moving device to enter a station, comprising:
in response to an entry command for the autonomous moving device, acquiring an environmental condition of a docking station;
determining a second preset path planning strategy according to the environmental condition;
planning an entry path according to the second preset path planning strategy, the entry path under a current entry command being different from an entry path under a previous entry command; and
controlling the autonomous moving device to enter the station based on the entry path.

Optionally, the autonomous moving device comprises a positioning device configured to receive position data of the autonomous moving device; and
the environmental condition comprises that a data quality parameter of the position data received by the positioning device is above a preset value or below the preset value.

Optionally, when the environmental condition comprises that the data quality parameter of the position data is above the preset value, the entry path comprises at least one segment of a random path or one of a plurality of preset paths.

Optionally, when the entry path comprises at least one segment of a random path, a start point of the at least one segment of the random path is any point, and an end point of the random path is a guidance position where the autonomous moving device docks with the docking station.

Optionally, the docking station comprises a charging station and a guidance module disposed near the charging station; when the environmental condition comprises that the data quality parameter of the position data is below the preset value, the entry path further comprises at least one segment of a path located near the guidance module.

Optionally, the path located near the guidance module comprises at least one segment of a path offset from the guidance module by a preset distance.

Optionally, the path located near the guidance module comprises at least one segment of a path along the guidance module for a preset length.

Optionally, a final path of the entry path is the path along the guidance module for the preset length.

Optionally, a region where the preset length is located is provided with a base plate.

Optionally, the preset distance is greater than a one-side wheel width of the autonomous moving device.

Optionally, the guidance module comprises a magnetic strip, and the autonomous moving device comprises a magnetic signal detection sensor; and the autonomous moving device determines a relative position between the autonomous moving device and the magnetic strip according to a magnetic signal detected by the magnetic signal detection sensor, to determine its own position.

Optionally, the guidance module comprises a magnetic strip, and the autonomous moving device comprises a magnetic signal detection sensor; and the autonomous moving device stores at least part of position data of the magnetic strip, and determines its own position according to at least part of positioning data received by the positioning and navigation module and the at least part of the position data of the magnetic strip.

Optionally, the environmental condition comprises that a position of the docking station is inside or outside a working map boundary of the autonomous moving device.

Optionally, the method further comprises acquiring a current position of the autonomous moving device, and determining a positional relationship between the autonomous moving device and the working map boundary; and determining whether the position of the docking station is inside or outside the boundary according to the positional relationship.

Optionally, when the environmental condition comprises that the position of the docking station is outside the working map boundary of the autonomous moving device, the entry strategy comprises controlling the autonomous moving device to determine its own position according to the guidance module, and to travel along a fourth random path to a vicinity of the guidance module, travel out of the working map boundary along a fifth random path, and end entering along a sixth random path; wherein:
the fourth random path comprises at least one segment of a path of randomly drawing an arc;
the fifth random path comprises at least one segment of a path located near the guidance module; and
the sixth random path is a path to a guidance position for charging docking with the docking station.

Optionally, a plurality of return points are preset within the working map boundary, the plurality of return points comprising at least one of a preset point on the guidance module and a preset point located at a preset distance from the guidance module, and the plurality of return points are a plurality of start points of the fifth random path; and
the second preset path planning strategy comprises controlling the autonomous moving device to reach a selected return point via the fourth random path.

In a seventh aspect, to alleviate the above problem, the present application provides an autonomous moving device, comprising:
a housing;
a moving assembly supporting and driving the autonomous moving device to travel, the moving assembly comprising traveling wheels;
a control device configured to control movement and work of the autonomous moving device; and
an environmental detection device;
wherein the environmental detection device is configured to detect an environmental condition, so that the control device executes the method for the autonomous moving device to exit the station as described above, and/or executes the method for the autonomous moving device to enter the station as described above.

The present application provides the method for the autonomous moving device to exit the docking station, the method for the autonomous moving device to return to the docking station, the autonomous moving device, and the docking station. By controlling a path of the autonomous moving device entering and exiting the docking station and by providing a docking station configuration, the autonomous moving device is prevented from repeatedly running over grass in a same area near the docking station to damage a lawn, thereby improving a visual effect of the lawn.

### BRIEF DESCRIPTION OF DRAWINGS

The accompanying drawings, which are incorporated in and constitute a part of this specification, illustrate embodiments consistent with the present application and together with the description serve to explain the principles of the present application. In order to more clearly illustrate the technical solutions of the embodiments of the present application, the drawings required for the description of the embodiments will be briefly introduced below. Obviously, for those of ordinary skill in the art, other drawings can be obtained from these drawings without creative effort.
Figure 1 is a side schematic view of an autonomous moving device according to some embodiments.
Figure 2 is a top view of an autonomous moving device according to some embodiments.
Figure 3 is a flowchart of a first method for an autonomous moving device to exit a docking station according to some embodiments.
Figure 4 is a flowchart of a method for an autonomous moving device to exit a docking station according to some embodiments.
Figure 5 is a first schematic diagram of exiting a docking station according to some embodiments.
Figure 6 is a second schematic diagram of exiting a docking station according to some embodiments.
Figure 7 is a first schematic diagram of a path of an autonomous moving device exiting a station according to some embodiments.
Figure 8 is a third schematic diagram of exiting a docking station according to some embodiments.
Figure 9 is a flowchart of a second method for an autonomous moving device to exit a docking station according to some embodiments.
Figure 10 is a fourth schematic diagram of exiting a docking station according to some embodiments.
Figure 11 is a fifth schematic diagram of exiting a docking station according to some embodiments.
Figure 12 is a sixth schematic diagram of exiting a docking station according to some embodiments.
Figure 13 is a flowchart of a method for an autonomous moving device to return to a docking station according to some embodiments.
Figure 14 is a first schematic diagram of returning to a docking station according to some embodiments.
Figure 15 is a second schematic diagram of returning to a docking station according to some embodiments.
Figure 16 is a first schematic diagram of a path of an autonomous moving device returning according to some embodiments.
Figure 17 is a flowchart of a method for an autonomous moving device to exit a station according to some embodiments.
Figure 18 is a second schematic diagram of a path of an autonomous moving device exiting a station according to some embodiments.
Figure 19 is a flowchart of a method for an autonomous moving device to enter a station according to some embodiments.

The realization, functional features, and advantages of the present application will be further described in conjunction with the embodiments and with reference to the accompanying drawings. Through the above drawings, specific embodiments of the present application have been shown, and more detailed descriptions will be provided below. These drawings and textual descriptions are not intended to limit the scope of the concept of the present application in any way, but rather to illustrate the concept of the present application to those skilled in the art by referring to specific embodiments.

### DETAILED DESCRIPTION

Exemplary embodiments will be described in detail herein, examples of which are illustrated in the accompanying drawings. When the following description refers to the accompanying drawings, the same numbers in different drawings represent the same or similar elements, unless otherwise indicated. The implementations described in the following exemplary embodiments do not represent all implementations consistent with the present application. Rather, they are merely examples of apparatus and methods consistent with some aspects of the present application as recited in the appended claims.

It should be noted that, in this document, the terms "comprises," "comprising," or any other variation thereof are intended to cover a non-exclusive inclusion, such that a process, method, article, or apparatus that comprises a list of elements includes not only those elements but also other elements not expressly listed, or elements inherent to such process, method, article, or apparatus. Without further limitation, an element defined by the phrase "comprising a ..." does not exclude the presence of additional identical elements in the process, method, article, or apparatus that comprises the element. In addition, components, features, and elements having the same name in different embodiments of the present application may have the same meaning or different meanings, and the specific meaning thereof shall be determined according to the explanation in the specific embodiment or in combination with the context in the specific embodiment.

The expressions of directions, angles, and the like mentioned in this document are defined as shown in the accompanying drawings, but these expressions and schematic drawings are only used to explain the present application for clear understanding of the present application, and are not intended to limit the present application.

The terms "first," "second," and the like mentioned in this document are used only to avoid confusion and are not related to order, importance, or master-slave relationship.

It should be understood that the specific embodiments described herein are merely for explaining the present application and are not intended to limit the present application.

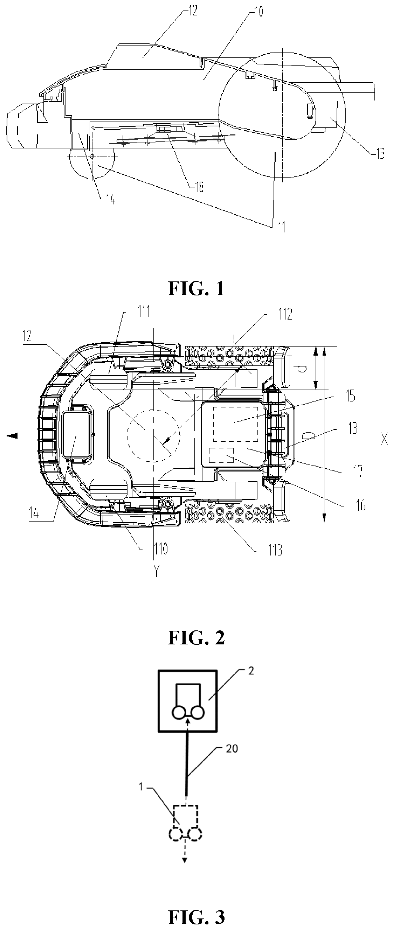

The present application does not limit the specific type of the autonomous moving device 1. For example, the autonomous moving device 1 may be an automatic lawn mower, an automatic lawn roller, an automatic sprinkler, or other device that automatically performs specific tasks on a lawn. As shown in FIGS. 1 and 2, schematic views of the autonomous moving device 1 are provided. It should be understood that any structure, dimension, components and devices included in the autonomous moving device 1, and installation positions thereof shown in FIGS. 1 and 2 are merely schematic and do not limit the autonomous moving device 1.

As shown in FIGS. 1 and 2, the autonomous moving device 1 includes a body 10. The body 10 includes a virtual longitudinal axis X and a lateral axis Y. The autonomous moving device further includes a moving assembly 11 mounted on the body 10. The moving assembly 11 is configured to support the autonomous moving device 1 and drive the autonomous moving device 1 to move on a ground. In some embodiments, the moving assembly 11 includes front wheels 110 and 111 located at a front side of the body 10, and rear wheels 112 and 113 located at a rear side of the body 10. It should be understood that, in other embodiments, the moving assembly may also include one front wheel and two rear wheels, or include two front wheels and one rear wheel, or any other combination.

In some embodiments, as shown in FIGS. 1 and 2, the autonomous moving device 1 further includes a positioning device 12 mounted on the body 10 and configured to receive position data of the autonomous moving device 1. The positioning device 12 includes at least one of positioning modules in the prior art, such as a satellite positioning module, a visual positioning module, an IMU positioning module, a UWB positioning module, a laser positioning module, a radar positioning module, and the like. In some embodiments, the positioning device 12 includes an RTK positioning module, an IMU positioning module, and an ODO positioning module mounted on the moving assembly 11, and fused positioning data of the above three positioning modules is used as the position data of the autonomous moving device 1.

In some embodiments, as shown in FIGS. 1 and 2, the autonomous moving device 1 further includes a storage device 13 mounted on the body 10 and configured to store various information, such as various information and control programs required for controlling the autonomous moving device 1. The storage device 13 may include a volatile or non-volatile storage medium.

In some embodiments, as shown in FIGS. 1 and 2, the autonomous moving device 1 further includes a sensing device 14 mounted on the body 10 and configured to sense an external environment. In some embodiments, the sensing device 14 includes a magnetic signal detection sensor 140, which can detect a magnetic field signal in an environment where the autonomous moving device 1 is located. In some embodiments, the sensing device 14 may also include other sensors such as an ultrasonic receiving sensor, an infrared receiving sensor, a visual sensor, a radar receiving sensor, a laser receiving sensor, etc., for detecting the presence of specific signals in the external environment.

In some embodiments, as shown in FIG. 2, the autonomous moving device 1 further includes a control device 15 mounted on the body 10 and configured to control movement and work of the autonomous moving device 1.

In some embodiments, as shown in FIG. 2, the autonomous moving device 1 further includes a navigation device 16 mounted on the body 10 and configured to plan and navigate the autonomous moving device 1. In cooperation with the positioning device 12, the navigation device 16 enables the autonomous moving device 1 to move along a pre-planned path. In some embodiments, the positioning device 12 and the navigation device 16 are integrated into one unit, and FIG. 2 is merely an example.

In some embodiments, as shown in FIG. 2, the autonomous moving device 1 further includes a power device 17 mounted on the body 10 and configured to provide power for movement and work of the autonomous moving device 1. The power device 16 may be a storage battery or any other energy source device that can provide power for the autonomous moving device.

In some embodiments, as shown in FIG. 2, the autonomous moving device 1 further includes a lawn maintenance device 18 mounted on the body 10 and configured to perform specific lawn maintenance tasks. In some embodiments, the autonomous moving device 1 is an automatic lawn mower, and the lawn maintenance device 18 includes a cutting blade disc for performing mowing tasks on a lawn.

As shown in FIG. 3, a user typically places a docking station 2 on a lawn, so that the autonomous moving device 1 can stop working and return to the docking station 2 when encountering certain special situations while performing maintenance tasks on the lawn. After the special situations are resolved, the autonomous moving device 1 exits the docking station 2 and continues to perform maintenance tasks. For example, in a special situation where the power device 17 of the autonomous moving device 1 has insufficient power, the autonomous moving device 1 may stop working and return to the docking station 2 to charge the power device 17, in which case the docking station 2 includes a charging station. After charging of the power device 17 is completed, the autonomous moving device 1 exits the docking station 2 and continues working. In a special situation where the autonomous moving device 1 encounters thunderstorms or a device failure on the autonomous moving device 1 that prevents the autonomous moving device 1 from continuing to work normally, the autonomous moving device 1 may return to the docking station 2 and be docked at the docking station 2, and after such special situation is resolved, the autonomous moving device 1 exits the docking station 2 and continues working. In a special situation where the autonomous moving device 1 needs to periodically return to the docking station 2 for device maintenance and inspection. In a special situation where the autonomous moving device 1 stops working and returns to the docking station 2 in response to a user command. Further examples are not listed here.

In some embodiments, to enable the autonomous moving device 1 to efficiently and conveniently enter and exit the docking station 2, the docking station 2 includes a guidance module 20, and the autonomous moving device includes a sensing device 14 capable of sensing the guidance module 20. Since the autonomous moving device 1 may not strictly move across the guidance module 20 when exiting or entering the docking station 2, to better represent a movement path of the autonomous moving device 1 sensing the guidance module 20 through the sensing device 14, a movement path of the autonomous moving device 1 when the guidance module 20 guides the autonomous moving device 1 to exit or return to the docking station 2 may be referred to as a preset guidance path. The preset guidance path is related to an arrangement position of the guidance module 20. For example, a portion of a path along which the autonomous moving device 1 moves along the guidance module 20 may be referred to as the preset guidance path, and a path along which the autonomous moving device 1 moves in a direction parallel to the guidance module 20 may also be referred to as the preset guidance path. In short, any movement path related to or consistent with an arrangement trend of the guidance module 20 may be referred to as the preset guidance path.

In some embodiments, the guidance module 20 may emit a specific signal, and the sensing device 14 on the autonomous moving device 1 can detect the specific signal, so that the autonomous moving device 1 can return to or exit the docking station 2 along the preset guidance path. In some embodiments, the guidance module 20 includes an infrared/laser/radar/ultrasonic transmitting sensor disposed on the docking station 2, and the sensing device 14 includes an infrared/laser/radar/ultrasonic receiving sensor capable of receiving infrared/laser/radar/ultrasonic signals transmitted by the infrared/laser/radar/ultrasonic transmitting sensor. In some embodiments, the guidance module 20 includes a guide wire disposed near the docking station 2, and the sensing device 14 includes a sensor capable of detecting a specific signal emitted by the guide wire. The specific signal may be a magnetic field signal. The guide wire may be an active guide wire such as a section of electric wire laid in the lawn, or a boundary electric wire laid at a boundary of the lawn, or the guide wire may be a passive guide wire such as a magnetic strip disposed at a front end of the docking station 2, in which case the sensing device 14 is a magnetic signal detection sensor. In some embodiments, the guidance module 20 may also be a special mark disposed near the docking station 2, and the sensing device 14 includes a sensor capable of sensing the special mark. For example, the guidance module 20 may be a special pattern disposed on the docking station, and the sensing device 14 may be a visual sensor capable of detecting the special pattern. The visual sensor senses the special pattern and controls a relative pose of the autonomous moving device 1, so as to control the autonomous moving device 1 to return to or exit the docking station 2 along the preset guidance path under guidance of the guidance module 20.

In some embodiments, the preset guidance path may also be a number of position points of a path near the docking station 2 stored in the storage device 13 of the autonomous moving device 1. When the autonomous moving device 1 exits or returns to the docking station 2, the control device 15 controls the autonomous moving device 1 to pass through the number of position points, so that the autonomous moving device 1 exits or returns to the docking station 2 along the preset guidance path.

In some embodiments, the preset guidance path includes at least one segment of a movement path along which the autonomous moving device 1 senses the magnetic strip through the magnetic signal detection sensor and moves along the magnetic strip.

If the autonomous moving device 1 exits or returns to the docking station 2 along the above preset guidance path too many times, the moving assembly 11 of the autonomous moving device 1 repeatedly runs over the lawn near the docking station 2, inhibiting growth of grass in the area, or even turning the grass in the area yellow or killing it, resulting in damage to the turf in the area and affecting the aesthetics of the lawn.

To solve the above problem, the present application rationally designs the method for the autonomous moving device 1 to exit the docking station 2, or the method for the autonomous moving device 2 to return to the docking station 2, or the configuration of the docking station 2, or the configuration of the autonomous moving device 1, so that the autonomous moving device 1 can not only efficiently and conveniently return to or exit the docking station 2, but also not damage the lawn near the docking station 2, thereby improving the overall aesthetics of the lawn. It should be noted that the technical features in the following aspects and embodiments may be combined arbitrarily. To keep the description concise, not all possible combinations of the technical features in the following embodiments are described. However, as long as there is no contradiction in the combinations of these technical features, they should be considered as falling within the scope of the present disclosure.

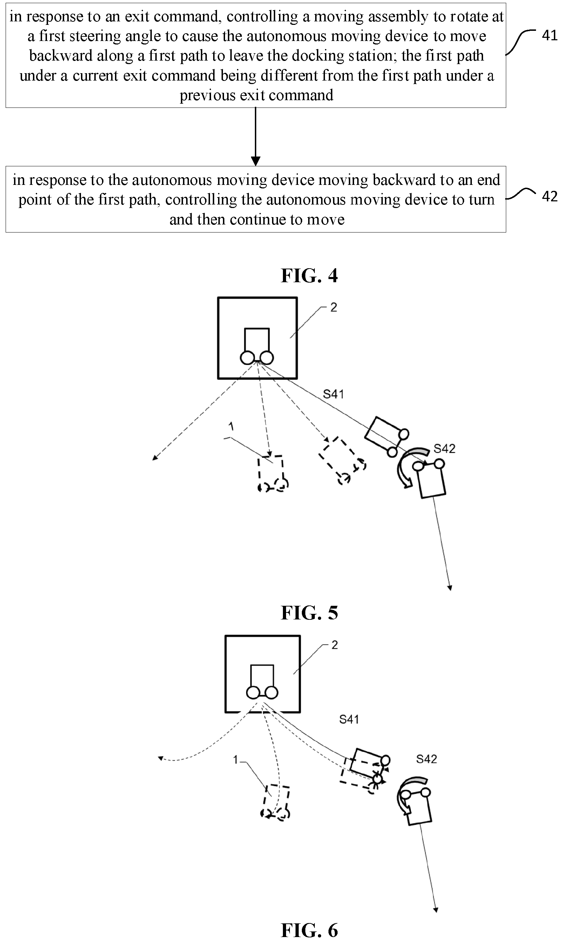

In a first aspect, the present application provides a method for an autonomous moving device 1 to exit a docking station 2. FIG. 4 is a flowchart of a first method for an autonomous moving device to exit a docking station according to some embodiments. The method includes:
S41: in response to an exit command, controlling a moving assembly to rotate at a first steering angle to cause the autonomous moving device to move backward along a first path to leave the docking station; the first path under a current exit command being different from the first path under a previous exit command.

It should be understood that, to efficiently and conveniently return to the docking station 2, the autonomous moving device 1 should return to the docking station 2 in a forward direction. The forward direction is a direction indicated by an arrow of the longitudinal axis X as shown in FIG. 2, which is also a normal movement direction of the autonomous moving device 1 when performing lawn maintenance tasks on the lawn. Correspondingly, to efficiently and conveniently exit the docking station 2, the autonomous moving device 1 should exit the docking station 2 in a backward direction, which is opposite to the forward direction. It should be understood that "forward" and "backward" are relative concepts. It can be determined that when the autonomous moving device 1 moves forward, a rotation direction of the moving assembly 11 thereof is opposite to a rotation direction of the moving assembly 11 when the autonomous moving device 1 moves backward.

As shown in a first schematic diagram of exiting a docking station in FIG. 5, in response to an exit command, the moving assembly 11 is controlled to rotate in a first direction to cause the autonomous moving device 1 to move backward along a first path to leave the docking station 2. As shown in FIG. 5, the first path indicated by a solid line is the first path under a current exit command, and the first path indicated by a dashed line is the first path under an exit command at another time. By controlling the first path under the current exit command to be different from the first path under the previous exit command, the autonomous moving device 1 is prevented from frequently exiting the docking station 2 along the same path, thereby solving the above problem of the moving assembly 11 damaging the turf.

The present application does not specifically limit the first path. For example, as described above, the autonomous moving device 1 includes the storage device 13, the control device 15, the positioning device 12, and the navigation device 16. The first path is a planned path for exiting the docking station 2 planned by the navigation device 16. With cooperation of the positioning device 12 and the navigation device 16, the control device 15 controls the autonomous moving device 1 to exit the docking station 2 along the first path. The above planned path may be a path planned in real time by the navigation device 16 in response to the exit command, or may be a planned path pre-stored in the storage device 13. For example, the docking station 2 includes the guidance module 20 disposed nearby, and correspondingly, the autonomous moving device 1 includes the sensing device 14 for sensing the guidance module 20. The first path is a path of the autonomous moving device 1 when the guidance module 20 guides the autonomous moving device 1 to exit the docking station 2. For example, the first path may also be a combination of the above two examples.

The present application does not specifically limit how the first path under the current exit command of the autonomous moving device 1 is different from the first path under the previous exit command. For example, the storage device 13 records the first path under the previous exit command. Under the current exit command, the navigation device 16 references the first path under the previous exit command to plan the first path under the current exit command that does not overlap with the first path under the previous exit command. For example, a number of non-overlapping first paths are pre-stored in the storage device 13, and the control device 15 controls the autonomous moving device 1 to exit the docking station 2 along different first paths under different exit commands. For example, the first path is a movement path planned by the navigation device 16 in response to the exit command, and under different exit commands, the navigation device 16 controls a steering angle of the planned first path relative to an axis of the docking station 2 to be different. For example, the first path is a random path planned by the navigation device 16 in response to the exit command, and randomness determines that the first path under the current exit command is different from the first path under the previous exit command. For example, the docking station 2 includes a number of guidance modules 20 disposed nearby, and correspondingly, the autonomous moving device 1 includes the sensing device 14 for sensing the guidance modules 20. The first path is a number of non-overlapping paths of the autonomous moving device 1 when the guidance modules 20 guide the autonomous moving device 1 to exit the docking station 2. The control device 15 controls the autonomous moving device 1 to exit the docking station 2 under guidance of different guidance modules 20 under different exit commands. For example, a combination of the above several manners may also be used.

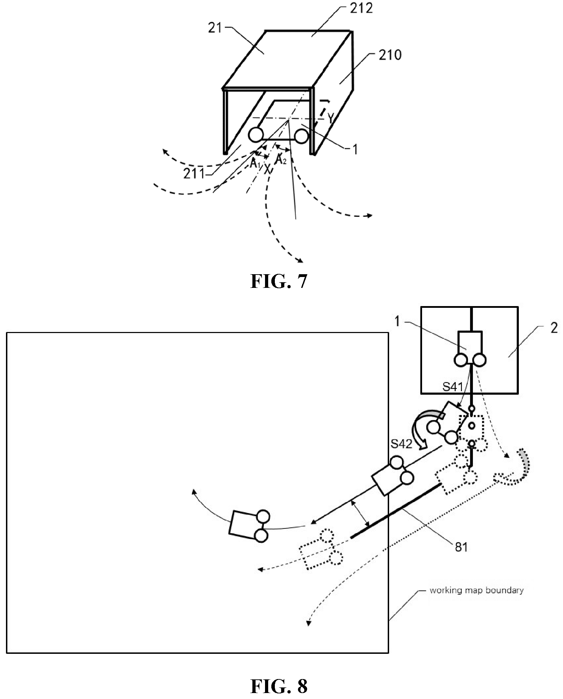

As shown in a second schematic diagram of exiting a docking station in FIG. 6, in conjunction with the description of FIG. 7, in some embodiments, since a range of the opening 211 of the docking station is limited, a passing range for the first path is also limited. Therefore, to allow the opening 211 of the docking station 2 to accommodate more non-overlapping first paths, the first path may be designed to have a shape different from a straight line. In the present application, the first path is an arc-shaped path having a first radius of curvature, the arc-shaped path being formed by the autonomous moving device 1 moving backward while maintaining the first steering angle. In this way, the opening 211 can accommodate more first paths, and the cooperation of multiple arc-shaped paths improves aesthetics compared to all first paths being straight lines.

S42: in response to the autonomous moving device moving backward to an end point of the first path, controlling the autonomous moving device to turn and then continue to move.

As shown in FIGS. 5 and 6, when the autonomous moving device 1 moves backward to the end point of the first path, the autonomous moving device 1 rotates the body 10 to adjust a pose, and then controls the moving assembly 11 to rotate so that the autonomous moving device 1 continues to move in the forward direction. Forward movement enables the autonomous moving device 1 to move more efficiently and conveniently in subsequent movement.

In some embodiments, to further improve efficiency of exiting the station of the autonomous moving device 1, a distance between the end point of the first path and a start point thereof is approximately equal to a body length of the autonomous moving device 1 in the longitudinal axis X direction. In this way, the autonomous moving device can rotate the body as early as possible to move in the forward direction to improve efficiency, without hindering pose adjustment of the autonomous moving device 1 at the end point of the first path.

In some embodiments, since obstacle avoidance sensors of the autonomous moving device 1 are usually disposed at the front, to prevent the autonomous moving device 1 from continuously moving backward and hitting an obstacle, the present application may limit a maximum length of the first path to increase safety during backward movement of the autonomous moving device 1. In the present application, the length of the first path may be generally set to be less than or equal to a product of a backward speed and a backward time threshold. That is, a speed of the autonomous moving device 1 during backward movement may be set. Since speeds of wheels on two sides are different when the autonomous moving device 1 is in a turning process, the present application may use a speed of a side with a smaller speed among the two-side wheels as the backward speed, or may use a speed of a side with a larger speed among the two-side wheels as the backward speed, or may use an average speed of the two-side wheels as the backward speed, and the present application does not limit this. According to safety requirements, the backward time threshold may be 2-10 s. Accordingly, for example, the speed of the side with the larger speed among the two-side wheels may be used as the backward speed, and the backward time threshold may be designed to be 5 s. In the present application, when the autonomous moving device 1 moves backward along a certain first path, the larger speed among the two-side wheels may be 0.5 m/s, and then the length of the first path needs to be less than 2.5 m.

It can be understood that if end points under different exit commands are too densely distributed, and turning is required at the end points to adjust the pose, the autonomous moving device 1 not only presses the grass but also grinds the grass by rotation near the end points. To alleviate the problem of damaging the lawn at the end points, in some embodiments, a distance between the end point of the first path under the current exit command and the end point of the first path under the previous exit command is controlled to be greater than or equal to a wheel width d of a traveling wheel located on one side of the body 10 of the autonomous moving device 1. For ease of understanding, FIG. 2 provides an example of the wheel width d. When the moving assembly 11 runs over the lawn, two wheel tracks each having a width approximately equal to the one-side wheel width d are left on the lawn. By controlling the distance between the end points of the first paths under different exit commands to be greater than the wheel width d, wheel tracks generated by the moving assembly 11 near the end points of the first paths under different exit commands are offset from each other, thereby solving the above problem.

In some embodiments, the exit command may be triggered by electric quantity, time, or an active command, specifically:
when the electric quantity of the autonomous moving device 1 is greater than a threshold, the exit command is triggered; or,
when a time satisfies a time threshold, the exit command is triggered; or,
when the autonomous moving device 1 receives an active command sent by a user terminal, the exit command is triggered.

In some embodiments, the autonomous moving device 1 includes the positioning device 12 for receiving position data of the autonomous moving device 1. Before exiting the station, the autonomous moving device 1 needs to determine that the positioning device 12 can receive the position data of the positioning device 12 and that a data quality parameter is above a preset value, and then the autonomous moving device can respond to the exit command to exit the docking station 2. Conversely, even if the autonomous moving device 1 receives the exit command, as long as the position data received by the positioning device 12 is below the preset value, the autonomous moving device 1 may not exit the docking station 2. This is to ensure that the positioning device 12 can work normally and that the current positioning signal is good, so as to ensure that the autonomous moving device 1 can be accurately positioned after exiting the station, and to prevent the autonomous moving device 1 from falling into a dangerous situation due to inability to position or inaccurate positioning after exiting the station.

In some embodiments, the docking station 2 includes a shelter 21. As shown in FIG. 7, a first schematic diagram of a path of the autonomous moving device exiting the station, when the autonomous moving device 1 is docked at the docking station 2, the shelter 21 covers the autonomous moving device 1 outside and can shield the autonomous moving device 1 from sunlight, rain, snow, and the like. The shelter 21 includes at least one side wall 210 and at least one opening 211 through which the autonomous moving device 1 enters and exits the docking station 2. In some embodiments, as shown in FIG. 7, the shelter further includes a roof 212 to improve its function of shielding the autonomous moving device 1 from wind and rain. It should be understood that the presence of the side walls 210 restricts a path of the autonomous moving device 1 entering and exiting the docking station 2. In some embodiments, a limit value of an angle between the first path and the longitudinal axis X direction of the body 10, such as A1 or A2 as shown in FIG. 7, is determined by a width of the body 10 of the autonomous moving device 1 in the lateral axis Y direction, such as a body width D as shown in FIG. 2, and a restriction imposed by the shelter 21 on movement of the autonomous moving device 1 in the lateral axis Y direction of the body 10, as shown in FIG. 7, which restriction is generated by the at least one side wall 210.

From the above, the restriction imposed by the shelter 21 on the autonomous moving device 1 limits a limit value of an offset angle of the first path from the X axis. Thus, near the start point of the first path, movement paths of the autonomous moving device 1 are relatively dense, and correspondingly, damage to the lawn by the moving assembly 11 is more severe. To solve the above problem, in some embodiments, as shown in FIG. 7, the docking station 2 includes a first ground plate 22 disposed outside the shelter 21. The first ground plate 22 is disposed on a ground near an opening 211. When the autonomous moving device 1 exits or returns to the docking station 2 through the opening 211, the moving assembly 11 runs over the first ground plate 22. Since the first ground plate 22 covers a relatively dense area of the first paths, there is no yellow or dead turf in the area, improving the aesthetics of the lawn. In some embodiments, the first ground plate 22 may be a perforated base plate. Such a perforated base plate not only does not affect normal growth of grass on the first ground plate 22, but also prevents the moving assembly 11 from directly pressing grass roots and damaging the turf.

In some embodiments, as shown in FIG. 7, a length B of the first ground plate 22 in the longitudinal axis X direction of the body 10 is determined by a number of paths of the first paths where wheel tracks generated by the moving assembly 11 on the lawn do not overlap, and the length B increases as the number of paths increases. It can be seen that the greater the number of paths where wheel tracks do not overlap, the denser the movement paths in front of the docking station 2, and the longer the length of the dense path area in the X-axis direction. Therefore, the length B of the first ground plate 22 in the X-axis direction also needs to be longer.

In some embodiments, to achieve rapid online operation, the present application provides different embodiments corresponding to different data qualities of position data. As shown in FIGS. 5 and 6, when the autonomous moving device 1 moves backward to the end point of the first path, if at this time a data quality parameter of the position data received by the positioning device 12 of the autonomous moving device 1 is above a preset value, the autonomous moving device 1 may be controlled to directly travel to a target working path. Specifically:
controlling the autonomous moving device 1 to turn and then continue to move includes:
acquiring a start point of a target working path of the autonomous moving device 1;
determining a preset direction according to the end point of the first path and the start point of the target working path;
controlling the autonomous moving device 1 to turn; and
in response to the autonomous moving device 1 facing the preset direction, controlling the autonomous moving device to move toward the start point of the target working path.

In the present application, the start point of the target working path may be a point where the autonomous moving device 1 returned to the docking station before the current exit command, and may be any point on the target working path or any point on a boundary of a working area, which is not limited in the present application.

In the present application, going online is a process in which the autonomous moving device 1 travels to the target working path.

When the autonomous moving device 1 moves backward to the end point of the first path, it is necessary to acquire a point where the autonomous moving device returned to the docking station before the current exit command, and use the point as the start point of the target working path of the autonomous moving device 1 under the current exit command. Then, the end point of the first path and the start point of the target working path are connected to determine a preset direction. Then, the autonomous moving device 1 is controlled to turn. To enable the autonomous moving device 1 to go online faster, the present application may control the autonomous moving device 1 to rotate in place by forward and reverse rotation of left and right side wheels. Of course, to minimize wear on the lawn, the autonomous moving device 1 may also be controlled to make an arc-shaped turn. For ease of description, the present application adopts in-place rotation to adjust the orientation of the autonomous moving device 1. During in-place rotation of the autonomous moving device 1, it is determined whether the orientation of the autonomous moving device 1 is consistent with the preset direction. When the orientation of the autonomous moving device 1 is consistent with the preset direction, the autonomous moving device 1 is controlled to move toward the start point of the target working path. For ease of understanding, the longitudinal axis X in FIG. 2 may be used as the orientation of the autonomous moving device 1.

In some embodiments, as shown in a third schematic diagram of exiting a docking station in FIG. 8, for safety reasons, after the autonomous moving device 1 moves backward along the first path to the end point, it is necessary to move a certain distance around the preset guidance path 81 before leaving the preset guidance path 81 to go online. In this way, the autonomous moving device 1 can still go online in case of some unresolvable problems. The unresolvable problems include, for example, failure of the positioning device 12 of the autonomous moving device 1 or inability of the positioning device 12 to receive a good-quality positioning signal, so that the autonomous moving device 1 cannot perform real-time positioning; or, for example, failure of obstacle avoidance of the autonomous moving device 1 around the docking station 2. For example, as shown in FIG. 8, when the docking station 2 is disposed outside a working area boundary of the autonomous moving device 1, the autonomous moving device 1 first moves backward a certain distance along the first path, then turns to travel to the preset guidance path 81, and then moves along the preset guidance path 81 to within the working area boundary to go online. This ensures that when the autonomous moving device 1 moves in an area outside the working area boundary where unknown factors and risk factors are relatively high, if the above problems are encountered, the autonomous moving device 1 can still go online normally.

Therefore, S42, controlling the autonomous moving device to turn and then continue to move, includes: controlling the autonomous moving device 1 to rotate the body; and in response to the longitudinal axis X of the autonomous moving device pointing to an exit direction of the preset guidance path 81, controlling the autonomous moving device to move away from the docking station along the preset guidance path 81 or along a path spaced apart from the preset guidance path 81 by a preset distance; a path along which the autonomous moving device moves away from the docking station under the current exit command being different from a path along which the autonomous moving device moves away from the docking station under the previous exit command. As shown in FIG. 8, in the above step, by controlling the path away from the docking station 2 under the current exit command to be different from the path away from the docking station 2 of the autonomous moving device 1 under the previous exit command, it is ensured that the moving assembly 11 of the autonomous moving device 1 does not damage the lawn in S42.

In some embodiments, a distance between the path along which the autonomous moving device 1 moves away from the docking station 2 under the current exit command and the path along which the autonomous moving device moves away from the docking station 2 under the previous exit command is controlled to be greater than or equal to the wheel width d. In conjunction with the above description, it should be understood that this allows wheel tracks generated by the moving assembly 11 of the autonomous moving device 1 under different exit commands to be offset from each other, further solving the problem of the moving assembly 11 damaging the lawn.

The present application does not specifically limit controlling the autonomous moving device to move away from the docking station 2 along the preset guidance path 81 or along a path spaced apart from the preset guidance path 81 by a preset distance, nor does it specifically limit how to control the path under the current exit command to be different from the path under the previous exit command. For example, the autonomous moving device 1 includes the positioning device 11 and the storage device 13. The storage device 13 stores at least part of position data of the preset guidance path 81. The position data of the preset guidance path 81 may be collected by a mapping device passing through the preset guidance path 81 before the autonomous moving device 1 works, or may be collected by the autonomous moving device 1 passing through the preset guidance path 81 during work. According to the at least part of the position data of the preset guidance path 81 and the position data of the autonomous moving device 1 received by the positioning device 11, the autonomous moving device 1 is controlled to follow a distance of the preset guidance path 81, so that the above paths under different exit commands are different. In some embodiments, it may be further controlled that a distance between the above path under the current exit command and the above path under the previous exit command is greater than the wheel width d. For example, the docking station 2 includes the guidance module 20, and the autonomous moving device 1 includes the sensing device 14 capable of sensing the guidance module 20. The preset guidance path is a movement path of the autonomous moving device 1 when the guidance module 20 guides the autonomous moving device 1 to exit the docking station 2. The autonomous moving device 1 may be controlled to follow the preset guidance path by a certain distance by controlling a strength of a signal emitted by the guidance module 20 sensed by the sensing device 14. For example, when the guidance module 20 includes a magnetic strip and the sensing device 14 correspondingly includes a magnetic signal detection sensor, the magnetic signal detection sensor may be controlled to detect a strength of a magnetic signal emitted by the magnetic strip, so as to control a distance by which the autonomous moving device 1 follows the magnetic strip.

In some embodiments, the path away from the docking station 2 includes a segment of a path parallel to the preset guidance path 81.

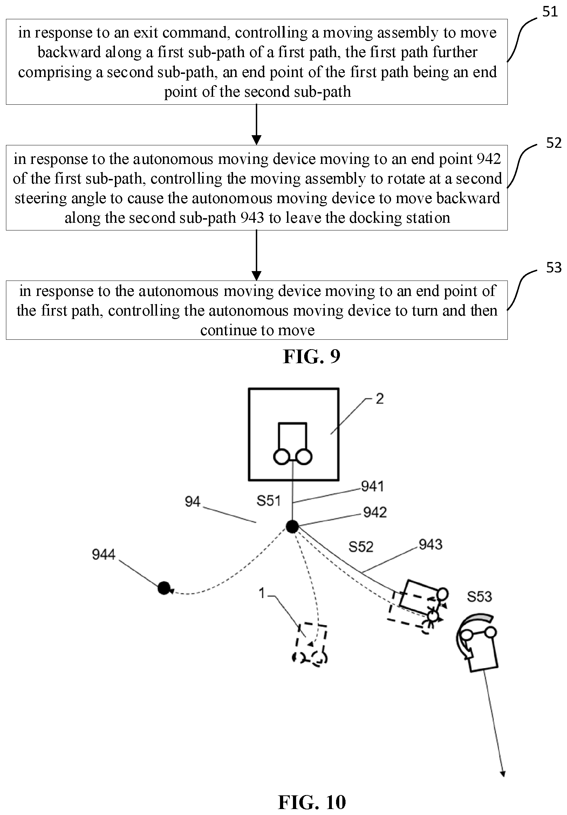

In a second aspect, the present application provides a method for an autonomous moving device to exit a docking station. FIG. 9 is a flowchart of a second method for an autonomous moving device to exit a docking station according to some embodiments. The method includes:
S51: in response to an exit command, controlling a moving assembly to move backward along a first sub-path of a first path, the first path further comprising a second sub-path, an end point of the first path being an end point of the second sub-path.

It should be understood that, to efficiently and conveniently return to the docking station 2, the autonomous moving device 1 should return to the docking station 2 in a forward direction. The forward direction is a direction indicated by an arrow of the longitudinal axis X as shown in FIG. 2, which is also a normal movement direction of the autonomous moving device 1 when performing lawn maintenance tasks on the lawn. Correspondingly, to efficiently and conveniently exit the docking station 2, the autonomous moving device 1 should exit the docking station 2 in a backward direction, which is opposite to the forward direction. It should be understood that "forward" and "backward" are relative concepts. It can be determined that when the autonomous moving device 1 moves forward, a rotation direction of the moving assembly 11 thereof is opposite to a rotation direction of the moving assembly 11 when the autonomous moving device 1 moves backward.

In the present application, for more concise description, the first path may be divided into a first sub-path and a second sub-path. The first sub-path is closer to the docking station than the second sub-path. A start point of the first path is a start point of the first sub-path, and an end point of the first path is an end point of the second sub-path.

In response to the exit command, the moving assembly 11 is controlled to move backward along the first sub-path of the first path. In the present application, the start point of the first sub-path is located inside the docking station, and the end point of the first sub-path is located near the opening of the docking station 2. In this way, the autonomous moving device 1 can be guided out of the narrow docking station, providing the autonomous moving device 1 with more space for exiting.

In the present application, there are two manners to guide the autonomous moving device 1 out of the docking station:

As shown in a fourth schematic diagram of exiting a docking station in FIG. 10, a first manner:
the first path 94 may be divided into a first sub-path 941 and a second sub-path 943;
the first sub-path 941 is a straight line or nearly a straight line, and the autonomous moving device 1 can be controlled to exit the docking station 2 straightly. This manner is applicable when a dimension of the opening 211 of the docking station 2 is approximately the same as a width of the autonomous moving device 1 in the lateral axis Y direction, so that the autonomous moving device 1 does not rub against the docking station 2.

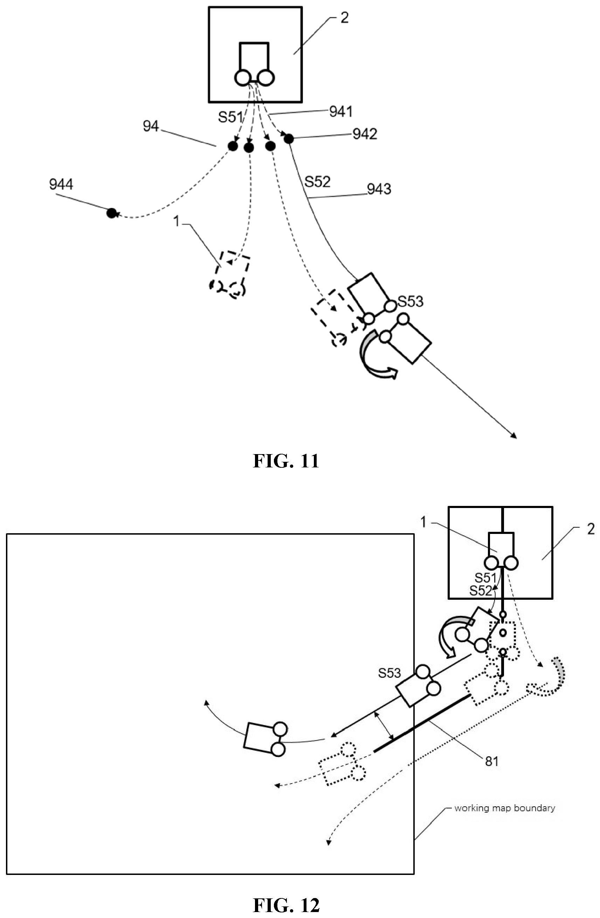

As shown in a fifth schematic diagram of exiting a docking station in FIG. 11, a second manner:
the first path 94 may be divided into a first sub-path 941 and a second sub-path 943;
the first sub-path 941 is an arc, and the first sub-path 941 is an arc-shaped path having a third radius of curvature, the arc-shaped path being formed by the autonomous moving device moving backward while maintaining a third steering angle. In this manner, the autonomous moving device 1 can make a slight adjustment when exiting the docking station 2, leaving more adjustment space for the second sub-path 943. This manner is applicable when the dimension of the opening 211 of the docking station 2 is relatively large compared to the width of the autonomous moving device 1 in the lateral axis Y direction, so that the autonomous moving device 1 does not rub against the docking station 2 and more non-overlapping first paths 94 can be accommodated within the fixed dimension of the opening 211.

S52: in response to the autonomous moving device moving to an end point 942 of the first sub-path, controlling the moving assembly to rotate at a second steering angle to cause the autonomous moving device to move backward along the second sub-path 943 to leave the docking station.

The second sub-path 943 is an arc-shaped path having a second radius of curvature, the arc-shaped path being formed by the autonomous moving device moving backward while maintaining the second steering angle. The first sub-path 941 is an arc-shaped path having a third radius of curvature, the arc-shaped path being formed by the autonomous moving device moving backward while maintaining the third steering angle.

The moving assembly is controlled to rotate at the second steering angle to cause the autonomous moving device to move backward along the second sub-path 943 to leave the docking station 2. As shown in FIG. 11, the second sub-path 943 indicated by a solid line is the second sub-path 943 under a current exit command, and the second sub-path 943 indicated by a dashed line is the second sub-path under an exit command at another time. By controlling the second sub-path 943 under the current exit command to be different from the second sub-path 943 under the previous exit command, the autonomous moving device 1 is prevented from frequently exiting the charging station along the same path, thereby solving the above problem of the moving assembly 11 damaging the turf.

The present application does not specifically limit the first path 94. For example, as described above, the autonomous moving device 1 includes the storage device 13, the control device 15, the positioning device 12, and the navigation device 16. The first path 94 is a planned path for exiting the docking station 2 planned by the navigation device 16. With cooperation of the positioning device 12 and the navigation device 16, the control device 15 controls the autonomous moving device 1 to exit the docking station 2 along the first path 94. The above planned path may be a path planned in real time by the navigation device 16 in response to the exit command, or may be a planned path pre-stored in the storage device 13. For example, the docking station 2 includes the guidance module 20 disposed nearby, and correspondingly, the autonomous moving device 1 includes the sensing device 14 for sensing the guidance module 20. The first path 94 is a path of the autonomous moving device 1 when the guidance module 20 guides the autonomous moving device 1 to exit the docking station 2. For example, the first path 94 may also be a combination of the above two examples.

The present application does not specifically limit how to control the first path 94 under the current exit command of the autonomous moving device 1 to be different from the first path 94 under the previous exit command. For example, the storage device 13 records the first path under the previous exit command. Under the current exit command, the navigation device 16 references the first path 94 under the previous exit command to plan the first path 94 under the current exit command that does not overlap with the first path under the previous exit command. For example, a number of non-overlapping first paths 94 are pre-stored in the storage device 13, and the control device 15 controls the autonomous moving device 1 to exit the docking station 2 along different first paths 94 under different exit commands. For example, the first path 94 is a movement path planned by the navigation device 16 in response to the exit command, and under different exit commands, the navigation device 16 controls a steering angle of the planned first path 94 relative to an axis of the docking station 2 to be different. For example, the first path 94 is a random path planned by the navigation device 16 in response to the exit command, and randomness determines that the first path under the current exit command is different from the first path under the previous exit command. For example, the docking station 2 includes a number of guidance modules 20 disposed nearby, and correspondingly, the autonomous moving device 1 includes the sensing device 14 for sensing the guidance modules 20. The first path 94 is a number of non-overlapping paths of the autonomous moving device 1 when the guidance modules 20 guide the autonomous moving device 1 to exit the docking station 2. The control device 15 controls the autonomous moving device 1 to exit the docking station 2 under guidance of different guidance modules 20 under different exit commands. For example, a combination of the above several manners may also be used.

S53: in response to the autonomous moving device moving to an end point 944 of the first path, controlling the autonomous moving device to turn and then continue to move.

As shown in FIGS. 10 and 11, when the autonomous moving device 1 moves backward to the end point 944 of the first path, the autonomous moving device 1 rotates the body 10 to adjust a pose, and then controls the moving assembly 11 to turn so that the autonomous moving device 1 moves in the forward direction. Forward movement enables the autonomous moving device 1 to move more efficiently and conveniently in subsequent movement.

In some embodiments, to further improve efficiency of exiting the station of the autonomous moving device 1, a distance between the end point 944 of the first path and a start point thereof is approximately equal to a body length of the autonomous moving device 1 in the longitudinal axis X direction. In this way, the autonomous moving device can rotate the body as early as possible to move in the forward direction to improve efficiency, without hindering pose adjustment of the autonomous moving device 1 at the end point of the first path.

In some embodiments, since obstacle avoidance sensors of the autonomous moving device 1 are usually disposed at the front, to prevent the autonomous moving device 1 from continuously moving backward and hitting an obstacle, the present application may limit a maximum length of the first path 94 to increase safety during backward movement of the autonomous moving device 1. In the present application, the length of the first path 94 may be generally set to be less than or equal to a product of a backward speed and a backward time threshold. That is, a speed of the autonomous moving device 1 during backward movement may be set. Since speeds of wheels on two sides are different when the autonomous moving device 1 is in differential movement, the present application may use a speed of a side with a smaller speed among the two-side wheels as the backward speed, or may use a speed of a side with a larger speed among the two-side wheels as the backward speed, or may use an average speed of the two-side wheels as the backward speed, and the present application does not limit this. According to safety requirements, the backward time threshold may be 2-10 s. Accordingly, for example, the speed of the side with the larger speed among the two-side wheels may be used as the backward speed, and the backward time threshold may be designed to be 5 s. In the present application, when the autonomous moving device 1 moves backward along a certain first path, the larger speed among the two-side wheels may be 0.5 m/s, and then the length of the first path needs to be less than 2.5 m.

It can be understood that if end points under different exit commands are too densely distributed, and rotation is required at the end points to adjust the pose, the autonomous moving device 1 not only presses the grass but also grinds the grass by rotation near the end points. To alleviate the problem of damaging the lawn at the end points, in some embodiments, a distance between the end point 944 of the first path under the current exit command and the end point 944 of the first path under the previous exit command is controlled to be greater than or equal to a wheel width d of a traveling wheel located on one side of the body 10 of the autonomous moving device 1. For ease of understanding, FIG. 2 provides an example of the wheel width d. When the moving assembly 11 runs over the lawn, two wheel tracks each having a width approximately equal to the one-side wheel width d are left on the lawn. By controlling the distance between the end points of the first paths under different exit commands to be greater than the wheel width d, wheel tracks generated by the moving assembly 11 near the end points of the first paths under different exit commands are offset from each other, thereby solving the above problem.

In some embodiments, the exit command may be triggered by electric quantity, time, or an active command, specifically:
when the electric quantity of the autonomous moving device 1 is greater than a threshold, the exit command is triggered; or,
when a time satisfies a time threshold, the exit command is triggered; or,
when the autonomous moving device 1 receives an active command sent by a user terminal, the exit command is triggered.

In some embodiments, the autonomous moving device 1 includes the positioning device 12 for receiving position data of the autonomous moving device 1. Before exiting the station, the autonomous moving device 1 needs to determine that the positioning device 12 can receive the position data of the positioning device 12 and that a data quality parameter is above a preset value, and then the autonomous moving device can respond to the exit command to exit the docking station 2. Conversely, even if the autonomous moving device 1 receives the exit command, as long as the position data received by the positioning device 12 is below the preset value, the autonomous moving device 1 may not exit the docking station 2. This is to ensure that the positioning device 12 can work normally and that the current positioning signal is good, so as to ensure that the autonomous moving device 1 can be accurately positioned after exiting the station, and to prevent the autonomous moving device 1 from falling into a dangerous situation due to inability to position or inaccurate positioning after exiting the station.

In some embodiments, the docking station 2 includes a shelter 21. As shown in FIG. 7, when the autonomous moving device 1 is docked at the docking station 2, the shelter 21 covers the autonomous moving device 1 outside and can shield the autonomous moving device 1 from sunlight, rain, snow, and the like. The shelter 21 includes at least one side wall 210 and at least one opening 211 through which the autonomous moving device 1 enters and exits the docking station 2. In some embodiments, as shown in FIG. 7, the shelter further includes a roof 212 to improve its function of shielding the autonomous moving device 1 from wind and rain. It should be understood that the presence of the side walls 210 restricts a path of the autonomous moving device 1 entering and exiting the docking station 2. In some embodiments, a limit value of an angle between the first path and the longitudinal axis X direction of the body 10, such as A1 or A2 as shown in FIG. 7, is determined by a width of the body 10 of the autonomous moving device 1 in the lateral axis Y direction, such as a body width D as shown in FIG. 2, and a restriction imposed by the shelter 21 on movement of the autonomous moving device 1 in the lateral axis Y direction of the body 10, as shown in FIG. 7, which restriction is generated by the at least one side wall 210.

From the above, the restriction imposed by the shelter 21 on the autonomous moving device 1 limits a limit value of an offset angle of the first path from the X axis. Thus, near the start point of the first path, movement paths of the autonomous moving device 1 are relatively dense, and correspondingly, damage to the lawn by the moving assembly 11 is more severe. To solve the above problem, in some embodiments, as shown in FIG. 7, the docking station 2 includes a first ground plate 22 disposed outside the shelter 21. The first ground plate 22 is disposed on a ground near an opening 211. When the autonomous moving device 1 exits or returns to the docking station 2 through the opening 211, the moving assembly 11 runs over the first ground plate 22. Since the first ground plate 22 covers a relatively dense area of the first paths, there is no yellow or dead turf in the area, improving the aesthetics of the lawn. In some embodiments, the first ground plate 22 may be a perforated base plate. Such a perforated base plate not only does not affect normal growth of grass on the first ground plate 22, but also prevents the moving assembly 11 from directly pressing grass roots and damaging the turf.

In some embodiments, as shown in FIG. 7, a length B of the first ground plate 22 in the longitudinal axis X direction of the body 10 is determined by a number of paths of the first paths where wheel tracks generated by the moving assembly 11 on the lawn do not overlap, and the length B increases as the number of paths increases. It can be seen that the greater the number of paths where wheel tracks do not overlap, the denser the movement paths in front of the docking station 2, and the longer the length of the dense path area in the X-axis direction. Therefore, the length B of the first ground plate 22 in the X-axis direction also needs to be longer.

In some embodiments, to achieve rapid online operation, the present application provides different embodiments corresponding to different data qualities of position data. As shown in FIGS. 10 and 11, when the autonomous moving device 1 moves backward to the end point 944 of the first path, if at this time a data quality parameter of the position data received by the positioning device 12 of the autonomous moving device 1 is above a preset value, the autonomous moving device 1 may be controlled to directly travel to a target working path. Specifically:
controlling the autonomous moving device 1 to turn and then continue to move includes:
acquiring a start point of a target working path of the autonomous moving device 1;
determining a preset direction according to the end point 944 of the first path and the start point of the target working path;
controlling the autonomous moving device 1 to turn; and
in response to the autonomous moving device 1 facing the preset direction, controlling the autonomous moving device to move toward the start point of the target working path.

In the present application, the start point of the target working path may be a point where the autonomous moving device 1 returned to the docking station before the current exit command, and may be any point on the target working path or any point on a boundary of a working area, which is not limited in the present application.

In the present application, going online is a process in which the autonomous moving device 1 travels to the target working path.

When the autonomous moving device 1 moves backward to the end point 944 of the first path, it is necessary to acquire a point where the autonomous moving device returned to the docking station before the current exit command, and use the point as the start point of the target working path of the autonomous moving device 1 under the current exit command. Then, the end point of the first path and the start point of the target working path are connected to determine a preset direction. Then, the autonomous moving device 1 is controlled to turn. To enable the autonomous moving device 1 to go online faster, the present application may control the autonomous moving device 1 to rotate in place by forward and reverse rotation of left and right side wheels. Of course, to minimize wear on the lawn, the autonomous moving device 1 may also be controlled to make an arc-shaped turn. For ease of description, the present application adopts in-place rotation to adjust the orientation of the autonomous moving device 1. During in-place rotation of the autonomous moving device 1, it is determined whether the orientation of the moving device 1 is consistent with the preset direction. When the orientation of the autonomous moving device 1 is consistent with the preset direction, the autonomous moving device 1 is controlled to move toward the start point of the target working path. For ease of understanding, the longitudinal axis X in FIG. 2 may be used as the orientation of the autonomous moving device 1.

In some embodiments, as shown in a sixth schematic diagram of exiting a docking station in FIG. 12, for safety reasons, after the autonomous moving device 1 moves backward along the first path to the end point 944, it is necessary to move a certain distance around the preset guidance path 81 before leaving the preset guidance path 81 to go online. Unresolvable problems include, for example, failure of the positioning device 12 of the autonomous moving device 1 or inability of the positioning device 12 to receive a good-quality positioning signal, so that the autonomous moving device 1 cannot perform real-time positioning; or, for example, failure of obstacle avoidance of the autonomous moving device 1 around the docking station 2. For example, as shown in FIG. 12, when the docking station 2 is disposed outside a working area boundary of the autonomous moving device 1, the autonomous moving device 1 first moves backward a certain distance along the first path 94, then turns to travel to the preset guidance path 81, and then moves along the preset guidance path 81 to within the working area boundary to go online. This ensures that when the autonomous moving device 1 moves in an area outside the working area boundary where unknown factors and risk factors are relatively high, if the above problems are encountered, the autonomous moving device 1 can still go online normally.

Therefore, S53, controlling the autonomous moving device to turn and then continue to move, includes: controlling the autonomous moving device 1 to rotate the body; and in response to the longitudinal axis of the autonomous moving device pointing to an exit direction of the preset guidance path 81, controlling the autonomous moving device to move away from the docking station 2 along the preset guidance path 81 or along a path spaced apart from the preset guidance path 81 by a preset distance; a path along which the autonomous moving device moves away from the docking station 2 under the current exit command being different from a path along which the autonomous moving device moves away from the docking station under the previous exit command. As shown in FIG. 12, in the above step, by controlling the path away from the docking station 2 under the current exit command to be different from the path away from the docking station 2 of the autonomous moving device 1 under the previous exit command, it is ensured that the moving assembly 11 of the autonomous moving device 1 does not damage the lawn in S53.

In some embodiments, a distance between the path along which the autonomous moving device 1 moves away from the docking station 2 under the current exit command and the path along which the autonomous moving device moves away from the docking station 2 under the previous exit command is controlled to be greater than or equal to the wheel width d. In conjunction with the above description, it should be understood that this allows wheel tracks generated by the moving assembly 11 of the autonomous moving device 1 under different exit commands to be offset from each other, further solving the problem of the moving assembly 11 damaging the lawn.

The present application does not specifically limit controlling the autonomous moving device to move away from the docking station 2 along the preset guidance path 81 or along a path spaced apart from the preset guidance path 81 by a preset distance, nor does it specifically limit how to control the path under the current exit command to be different from the path under the previous exit command. For example, the autonomous moving device 1 includes the positioning device 11 and the storage device 13. The storage device 13 stores at least part of position data of the preset guidance path. The position data of the preset guidance path 81 may be collected by a mapping device passing through the preset guidance path before the autonomous moving device 1 works, or may be collected by the autonomous moving device 1 passing through the preset guidance path during work. According to the at least part of the position data of the preset guidance path 81 and the position data of the autonomous moving device 1 received by the positioning device 11, the autonomous moving device 1 is controlled to follow a distance of the preset guidance path, so that the above paths under different exit commands are different. In some embodiments, it may be further controlled that a distance between the above path under the current exit command and the above path under the previous exit command is greater than the wheel width d. For example, the docking station 2 includes the guidance module 20, and the autonomous moving device 1 includes the sensing device 14 capable of sensing the guidance module 20. The preset guidance path is a movement path of the autonomous moving device 1 when the guidance module 20 guides the autonomous moving device 1 to exit the docking station 2. The autonomous moving device 1 may be controlled to follow the preset guidance path by a certain distance by controlling a strength of a signal emitted by the guidance module 20 sensed by the sensing device 14. For example, when the guidance module 20 includes a magnetic strip and the sensing device 14 correspondingly includes a magnetic signal detection sensor, the magnetic signal detection sensor may be controlled to detect a strength of a magnetic signal emitted by the magnetic strip, so as to control a distance by which the autonomous moving device 1 follows the magnetic strip.

In some embodiments, the path away from the docking station 2 includes a segment of a path parallel to the preset guidance path 81.

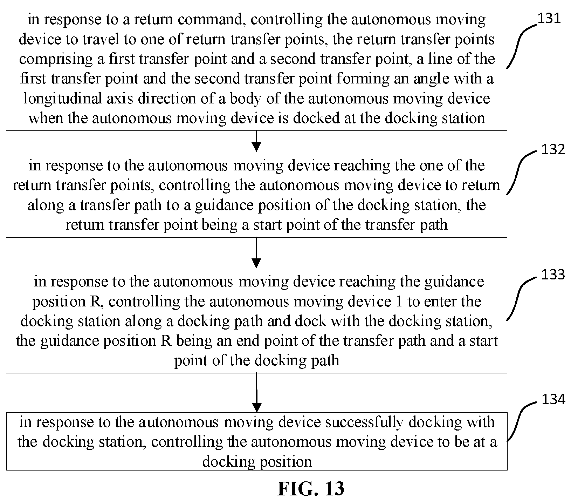

In a third aspect, the present application provides a method for an autonomous moving device 1 to return to a docking station 2. FIG. 13 is a flowchart of a method for an autonomous moving device to return to a docking station according to some embodiments. The method includes:
S131: in response to a return command, controlling the autonomous moving device to travel to one of return transfer points, the return transfer points comprising a first transfer point and a second transfer point, a line of the first transfer point and the second transfer point forming an angle with a longitudinal axis direction of a body of the autonomous moving device when the autonomous moving device is docked at the docking station.

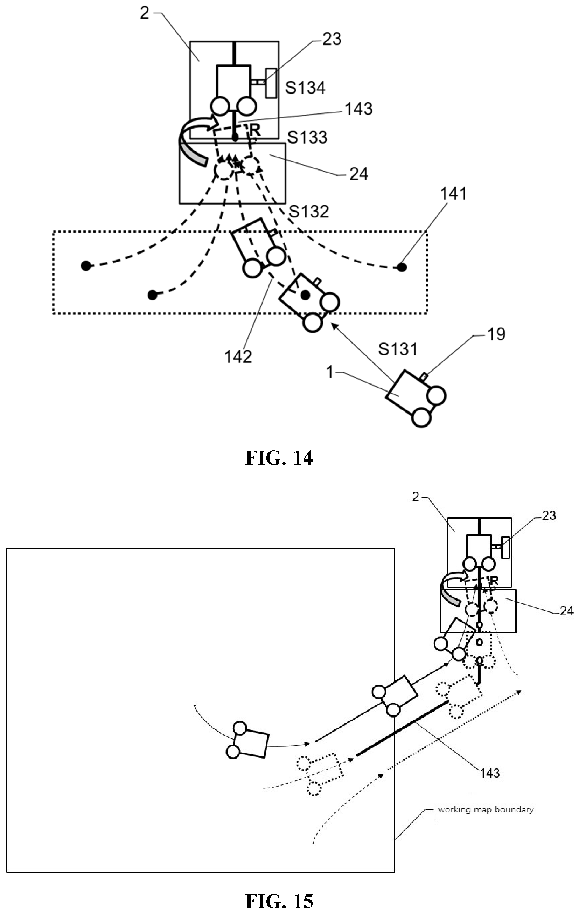

As shown in a first schematic diagram of returning to a docking station in FIG. 14, in response to a return command, the autonomous moving device 1 first returns to one of transfer points 141 near the docking station 2. The present application does not limit the specific arrangement of the transfer points. For example, the transfer points may be a number of position points pre-stored in the autonomous moving device 1, or may be any points in a preset transfer area. The transfer point 141 under a current command is controlled to be different from the transfer point 141 under a previous return command, to prevent the moving assembly 11 from damaging the turf near the return point. Specifically, from the first transfer point and the second transfer point, a point having a consecutive selection count lower than a transfer threshold may be selected as the return transfer point 141. In the present application, the transfer threshold may be 2, 3, or 4 times, etc., depending on the hardness of the lawn.

In the present application, the first transfer point and the second transfer point may be points near the docking station 2. The autonomous moving device 1 further includes the moving assembly 11, and the moving assembly 11 includes at least one rear wheel. To ensure that the first transfer point and the second transfer point do not interfere with each other, a distance between the first transfer point and the second transfer point may be greater than the wheel width d of the rear wheel. Thus, when the autonomous moving device 1 is at the first transfer point or the second transfer point, mutual friction can be prevented, avoiding damage to the turf. Of course, the above first transfer point and second transfer point are merely examples. Under the premise of sufficient open area, more transfer points may be designed, such as a third transfer point, a fourth transfer point, a fifth transfer point, and the like.

In the present application, the line of the first transfer point and the second transfer point forms an angle with the longitudinal axis direction of the body of the autonomous moving device when the autonomous moving device is docked at the docking station, thereby preventing the autonomous moving device from always traveling through the same path and preventing damage to the lawn.

In the present application, the autonomous moving device 1 may be simultaneously provided with a camera, a positioning module, and an inertial navigation system. The autonomous moving device 1 may travel to the return transfer point 141 based on a first navigation signal. In the present application, the first navigation signal may generally be one or more of a visual signal, a real-time kinematic (RTK) positioning signal, and/or an inertial navigation signal. The positioning module is a module for receiving the RTK positioning signal and determining its own absolute position. Generally, the positioning module may be a global navigation satellite system (GNSS) that receives the RTK positioning signal.

S132: in response to the autonomous moving device reaching the one of the return transfer points, controlling the autonomous moving device to return along a transfer path to a guidance position of the docking station, the return transfer point being a start point of the transfer path.

In the present application, corresponding to the first transfer point and the second transfer point, taking the first transfer point as an example, at least two transfer paths 142 are provided between the first transfer point and the guidance position, and end points of the two transfer paths 142 are the guidance position R. Among them, at least two transfer paths have preset curvature radii, and at least two of the transfer paths do not overlap with each other. For example, a first transfer path and a second transfer path are provided between the first transfer point and the guidance position. The first transfer path has a first radius of curvature, and the second transfer path has a second radius of curvature. The first radius of curvature is different from the second radius of curvature, and the first transfer path and the second transfer path do not overlap, or the first transfer path and the second transfer path have different start points but both have the end point at the guidance position R.

As shown in FIG. 14, in response to the autonomous moving device 1 having reached the return transfer point 141, the autonomous moving device 1 is controlled to return along the transfer path 142 to the guidance position R preset near or on the docking station 2. The present application does not specifically limit the arrangement of the guidance position R. For example, the autonomous moving device 1 includes the positioning device 12, the storage device 13, the navigation device 16, and the control device 15. The guidance position R is a position point pre-stored in the storage device 13. The autonomous moving device 1 includes the positioning device 12 and the navigation device 16. With cooperation of the positioning device 12 and the navigation device 16, the control device 15 controls the autonomous moving device 1 to return from the return transfer point 141 to the guidance position R along the planned transfer path 142. For example, the guidance position R is a point on the docking path 143 (see the above description for details, not repeated here), and the autonomous moving device 1 is controlled to search for the docking path 143 and move along the docking path 143 to reach the guidance position R. By controlling the transfer path 142 under the current return command of the autonomous moving device 1 to be different from the transfer path 142 under the previous return command, the moving assembly 11 can be prevented from damaging the turf during this process.

The present application does not limit the transfer path 142 and how to control the transfer path 142 under the current return command to be different from the transfer path 142 under the previous return command. For example, as described above, the autonomous moving device 1 includes the storage device 13, the control device 15, the positioning device 12, and the navigation device 16. The second path is a planned path for returning to the guidance position R planned by the navigation device 16. With cooperation of the positioning device 12 and the navigation device 16, the control device 15 controls the autonomous moving device 1 to reach the guidance position R along the transfer path. The above planned path may be a path planned in real time by the navigation device 16 in response to the return command, or may be a planned path pre-stored in the storage device 13. For example, the docking station 2 includes the guidance module 20 disposed nearby, and correspondingly, the autonomous moving device 1 includes the sensing device 14 for sensing the guidance module 20. The transfer path is a path of the autonomous moving device 1 when the guidance module 20 guides the autonomous moving device 1 to return to the guidance position R. For example, the transfer path 142 may also be a combination of the above two examples.

For example, in some embodiments, when the docking path 143 is included, for example, the storage device 13 records the transfer path 142 under the previous return command. Under the current return command, the navigation device 16 references the transfer path 142 under the previous return command to plan the transfer path 142 under the current exit command that does not overlap with the transfer path 142 under the previous return command. For example, a number of non-overlapping transfer paths 142 are pre-stored in the storage device 13, and the control device 15 controls the autonomous moving device 1 to return to the guidance position R along different transfer paths 142 under different return commands. For example, the transfer path 142 is a movement path planned by the navigation device 16 in response to the return command, and under different return commands, the navigation device 16 controls a deflection angle of the planned transfer path 142 relative to the axis of the docking station 2 to be different. For example, the transfer path 142 is a random path planned by the navigation device 16 in response to the return command, and randomness determines that the transfer path under the current return command is different from the transfer path 142 under the previous return command. For example, the docking station 2 includes a number of guidance modules 20 disposed nearby, and correspondingly, the autonomous moving device 1 includes the sensing device 14 for sensing the guidance modules 20. The transfer path 142 is a number of non-overlapping paths of the autonomous moving device 1 when the guidance modules 20 guide the autonomous moving device 1 to return to the guidance position R. The control device 15 controls the autonomous moving device 1 to return to the guidance position R under guidance of different guidance modules 20 under different return commands. For example, a combination of the above several manners may also be used.

In the present application, the autonomous moving device may be controlled to return along the transfer path 142 to the guidance position R of the docking station 2 based on the first navigation signal. In the present application, the first navigation signal may generally be one or more of a visual signal, an RTK signal, and/or an inertial navigation signal. This means that from controlling the autonomous moving device to travel to the return transfer point 141 to controlling the autonomous moving device 1 to travel along the transfer path 142, the same navigation signal may be used without switching, ensuring efficiency and speed of the return process.

S133: in response to the autonomous moving device reaching the guidance position R, controlling the autonomous moving device 1 to enter the docking station along a docking path 143 and dock with the docking station, the guidance position R being an end point of the transfer path 142 and a start point of the docking path 143, respectively.

As shown in FIG. 14, in response to the autonomous moving device 1 reaching the guidance position R, the autonomous moving device 1 further docks with the docking station 2. The present application does not limit the manner of docking between the autonomous moving device 1 and the docking station 2. For example, as shown in FIG. 14, the docking station 2 includes the docking path 143 as described above, and the autonomous moving device 1 can further dock with the docking station 2 along the docking path 143. For example, the docking station 2 includes the guidance module 20, and the autonomous moving device 1 includes the sensing device 14. The sensing device 14 senses a signal emitted by the guidance module 20 to enable the autonomous moving device to further dock with the docking station 2 along the docking path. For example, the guidance module 20 includes a magnetic strip disposed on or near the docking station 2, and the sensing device 14 includes a magnetic signal sensor. The magnetic signal sensor detects a magnetic signal emitted by the magnetic strip to enable the autonomous moving device 1 to dock with the docking station 2 along the magnetic strip.

In the present application, the autonomous moving device 1 may be simultaneously provided with a magnetic sensor, an infrared sensor, and an ultrasonic transceiver. The autonomous moving device 1 may enter the docking station 2 along the docking path 143 and dock with the docking station 2 based on a second navigation signal. The second navigation signal may generally be one or more of a magnetic field signal, an infrared signal, and/or an ultrasonic signal. Since the docking station 2 may be disposed in an area where signals are blocked, causing failure of the first navigation signal, to cover all working scenarios as much as possible, the second navigation signal in the present application may be a signal that will not fail due to blocking. Generally, after the autonomous moving device 1 reaches the guidance position R of the docking station 2, it is necessary to switch the navigation signal, and then enter the docking station 2 along the docking path 143. Although switching the navigation signal reduces efficiency, it can cover all working scenarios and can be compatible with the docking station being disposed in any area, ensuring successful docking.

S134: in response to the autonomous moving device successfully docking with the docking station, controlling the autonomous moving device to be at a docking position.

When the autonomous moving device 1 successfully docks with the docking station 2, the autonomous moving device 1 is controlled to be at the docking position.

For example, successful docking may be that the autonomous moving device 1 moves to a preset position on the docking station 2. For example, as shown in FIG. 14, the autonomous moving device 1 includes a first charging terminal 19, and the docking station 2 includes a second charging terminal 23. When the first charging terminal 19 is electrically connected to the second charging terminal 23, the docking station 2 can charge the autonomous moving device 1. At this time, docking is successful, and the autonomous moving device 1 is at the docking position. The first charging terminal 19 of the autonomous moving device 1 at the docking position can be electrically connected to the second charging terminal 23. The present application does not limit the installation positions of the first charging terminal 19 and the second charging terminal 23, as long as it is ensured that the first charging terminal 19 of the autonomous moving device 1 can be electrically connected to the second charging terminal 23, that position can serve as the docking position. For example, the first charging terminal 19 may be installed on one side of the X axis of the body 10 of the autonomous moving device 1, or on a front side of the body 10, and the second charging terminal 23 is installed on the docking station 2 at a position convenient for guidance to the first charging terminal 19.

In some embodiments, to ensure better docking efficiency and prevent the autonomous moving device 1 from making a "U-turn," in the present application, an angle between a line from the first transfer point 141 to the guidance position R and an orientation of the autonomous moving device 1 at the docking position is less than 90°. In the present application, the orientation of the autonomous moving device 1 at the docking position may be an orientation of the longitudinal axis X thereof when at the docking position.

In some embodiments, as shown in FIG. 14, before or after the autonomous moving device 1 reaches the guidance position R, it adjusts a pose so that the autonomous moving device 1 can dock with the docking station 2 in a substantially straight-line movement. It should be understood that straight-line movement docking is a relatively efficient and convenient docking manner.

In some embodiments, as shown in FIG. 14, the docking station 2 includes a second ground plate 24 disposed near the guidance position R. When the autonomous moving device 1 returns to and enters the docking station along the docking path 143, the autonomous moving device 1 runs over the second ground plate 24. Providing the second ground plate 24 near the guidance position R prevents the autonomous moving device 1 from damaging the lawn when returning to the guidance position R.

In some embodiments, the autonomous moving device 1 includes the positioning device 12 and the moving assembly 11. As described above and shown in FIG. 2, the moving assembly 11 includes at least one rear wheel. When the autonomous moving device is at the guidance position R, the rear wheel of the autonomous moving device is on the second ground plate 24. Specifically, a distance from a contour edge of the second ground plate 24 in a direction away from the docking station 2 to the guidance position R on a ground is greater than or equal to a distance L from the positioning device 12 to the at least one rear wheel on the ground. The autonomous moving device 1 reaches the guidance position R with assistance of the positioning device 12. At this time, the positioning device 12 is located at the guidance position R. If pose adjustment is required, the body 10 is rotated here, and the moving assembly 11 grinds the grass. By setting the distance from the contour edge of the second ground plate 24 in the direction away from the docking station 2 to the guidance position R on the ground to be greater than or equal to the distance L from the positioning device 12 to the at least one rear wheel on the ground, the problem of grinding the grass and damaging the lawn here can be avoided.

It should be understood that the second ground plate 24 and the first ground plate 22 may be the same base plate that meets the requirements.

In some embodiments, for convenience of packaging and transportation, a length of the second ground plate 24 is less than or equal to a length of the docking station 2, and a direction of the length is a direction in which the autonomous moving device 1 enters the docking station 2, that is, the longitudinal axis X direction when the autonomous moving device 1 enters the docking station 2 and docks. The second ground plate 24 is movably connected to the docking station 2. That is, the second ground plate 24 can be detachably mounted to the docking station 2 by means of hinging, snap-fitting, or magnetic attraction.

As shown in a second schematic diagram of returning to a docking station in FIG. 15, the docking station 2 includes the guidance module 20 as described above. For example, when the guidance module 20 is a magnetic strip, a magnetic field signal generated by the magnetic strip can control the autonomous moving device 1 to enter the docking station 2. At this time, a path along which the autonomous moving device 1 moves to enter the docking station 2 is the docking path 143.

The docking path 143 may include two types:
1. Coinciding with the magnetic strip, but only being a portion of the magnetic strip. For example, the magnetic strip is five meters long. When the autonomous moving device 1 enters the docking station 2, it only uses two meters extending backward from the docking station 2 to complete the return. The path formed by the portion of the magnetic strip used by the autonomous moving device 1 for returning may be referred to as the docking path 143.
2. Being parallel to the magnetic strip with a certain spacing. For example, the magnetic strip is five meters long. When the autonomous moving device 1 enters the docking station 2, it uses signals extending to two sides of the magnetic strip to complete the return. The path formed by the portion of the magnetic strip used by the autonomous moving device 1 for returning is parallel to the magnetic strip. The autonomous moving device 1 does not travel along the magnetic strip, but a trend of its path is the same as that of the magnetic strip. At this time, the path formed by returning according to the magnetic strip may be referred to as the docking path 143.

In the present application, the docking path 143 is used to guide the autonomous moving device 1 to dock with the docking station 2, and the guidance position R is located on the docking path 143.

In some embodiments, as shown in FIG. 15, for safety reasons, in some special cases, the docking path 143 may be extended, and the autonomous moving device 1 will not return along the transfer path 142 but directly along the extended docking path 143. Since the docking path 143 may be guided by a magnetic signal, using the extended docking path 143 to replace the transfer path 142 brings an advantage: when there is shielding near the docking station 2 that causes failure of the first navigation signal, the autonomous moving device 1 can accurately return to the docking station 2. Therefore, when returning to the docking station 2, the autonomous moving device 1 first returns to the vicinity of the extended docking path 143, then moves along the periphery of the docking path 143 to the guidance position R, and after passing the guidance position R, continues along the docking path 143 to return to the docking station 2. In this way, if the autonomous moving device 1 encounters some unresolvable problems, it can safely return to the docking station 2 along the docking path 143. The unresolvable problems include, for example, failure of the positioning device 12 of the autonomous moving device 1 or inability of the positioning device 12 to receive a good-quality positioning signal, so that the autonomous moving device 1 cannot perform real-time positioning; or, for example, failure of obstacle avoidance of the autonomous moving device 1 around the docking station 2. For example, as shown in FIG. 15, when the docking station 2 is disposed outside a working area boundary of the autonomous moving device 1, the autonomous moving device 1 first returns to the vicinity of the docking path 143, and then returns to the docking station 2 along the docking path 143. This ensures that when the autonomous moving device 1 moves in an area outside the working area boundary where unknown factors and risk factors are relatively high, if the above problems are encountered, the autonomous moving device 1 can return to the docking station 2 along the docking path 143 and be at the docking position.

Therefore, controlling the autonomous moving device 1 to return to the guidance position R includes controlling the autonomous moving device 1 to return to the guidance position R along the docking path 143 or along a path spaced apart from the docking path 143 by a preset distance, and a path for returning to the guidance position under a current return command being different or partially different from a path for returning to the guidance position R under a previous return command, to prevent overlap of paths of the autonomous moving device 1 and resulting lawn damage.

In some embodiments, a distance between the path for returning to the guidance position R under the current return command of the autonomous moving device 1 and the path for returning to the guidance position R under the previous exit command is controlled to be greater than or equal to the one-side wheel width d. In conjunction with the above description, it should be understood that this allows wheel tracks generated by the moving assembly 11 of the autonomous moving device 1 under different return commands to be offset from each other, further solving the problem of the moving assembly 11 damaging the lawn.

The present application does not specifically limit controlling the autonomous moving device 1 to return to the guidance position R along the docking path 143 or along a path spaced apart from the docking path 143 by a preset distance, nor does it specifically limit how to control the path under the current return command to be different from the path under the previous return command. For example, the autonomous moving device 1 includes the positioning device 11 and the storage device 13. The storage device 13 stores at least part of position data of the docking path 143. The position data of the docking path 143 may be collected by a mapping device passing through the docking path 143 before the autonomous moving device 1 works, or may be collected by the autonomous moving device 1 passing through the docking path 143 during work. According to the at least part of the position data of the docking path 143 and the position data of the autonomous moving device 1 received by the positioning device 11, the autonomous moving device 1 is controlled to follow a distance of the docking path 143, so that the above paths under different return commands are different. In some embodiments, it may be further controlled that a distance between the above path under the current return command and the above path under the previous return command is greater than the one-side wheel width d. For example, the docking station 2 includes the guidance module 20, and the autonomous moving device 1 includes the sensing device 14 capable of sensing the guidance module 20. The docking path 143 is a movement path of the autonomous moving device 1 when the guidance module 20 guides the autonomous moving device 1 to exit or return to the docking station 2. The autonomous moving device 1 may be controlled to follow the docking path 143 by a certain distance by controlling a strength of a signal emitted by the guidance module 20 sensed by the sensing device 14. For example, when the guidance module 20 includes a magnetic strip and the sensing device 14 correspondingly includes a magnetic signal detection sensor, the magnetic signal detection sensor may be controlled to detect a strength of a magnetic signal emitted by the magnetic strip, so as to control a distance by which the autonomous moving device 1 follows the magnetic strip.

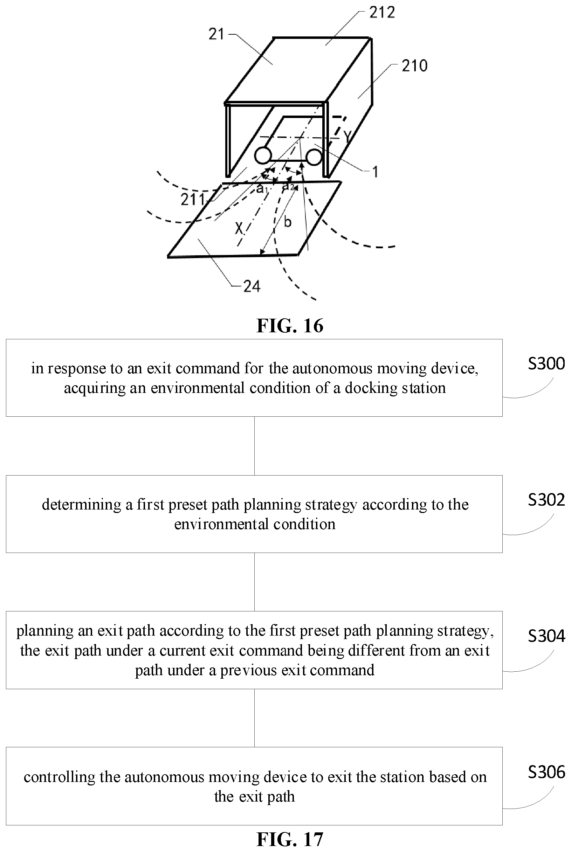

From the above, the docking station 2 includes the shelter 21. When the autonomous moving device 1 is docked at the docking station 2, the shelter 21 covers the autonomous moving device 1 outside and can shield the autonomous moving device 1 from sunlight, rain, snow, and the like. The shelter 21 includes at least one side wall 210 and at least one opening 211 through which the autonomous moving device 1 enters and exits the docking station 2. In some embodiments, the shelter further includes a roof 212 to improve its function of shielding the autonomous moving device 1 from wind and rain. It should be understood that the presence of the side walls 210 restricts a path of the autonomous moving device 1 entering and exiting the docking station 2. In some embodiments, a limit value of an angle between the first path and the longitudinal axis X direction of the body 10, such as A1 or A2 as shown in FIG. 7, is determined by a width of the body 10 of the autonomous moving device 1 in the lateral axis Y direction, such as a body width D as shown in FIG. 2, and a restriction imposed by the shelter 21 on movement of the autonomous moving device 1 in the lateral axis Y direction of the body 10, as shown in FIG. 7, which restriction is generated by the at least one side wall 210. Correspondingly, when the autonomous moving device 1 returns to the docking station 2, as shown in FIG. 16, a first schematic diagram of a return path of the autonomous moving device, in some embodiments, a limit value of an angle between the docking path 143 and the longitudinal axis X direction of the body 10, such as a1 or a2 as shown in FIG. 16, is determined by a width of the body 10 of the autonomous moving device 1 in the lateral axis Y direction, such as a body width D as shown in FIG. 2, and a restriction imposed by the shelter 21 on movement of the autonomous moving device 1 in the lateral axis Y direction of the body 10.

From the above, the restriction imposed by the shelter 21 on the autonomous moving device 1 also limits a limit value of an offset angle of the transfer path 142 from the X axis. Thus, near the guidance position R, movement paths of the autonomous moving device 1 are relatively dense, and correspondingly, damage to the lawn by the moving assembly 11 is more severe. To solve the above problem, the second ground plate 24 is disposed on a ground near an opening 211. When the autonomous moving device 1 exits or returns to the docking station 2 through the opening 211, the moving assembly 11 runs over the second ground plate 24. Since the second ground plate 24 covers a relatively dense area of the transfer paths 142, there is no yellow or dead turf in the area, improving the aesthetics of the lawn. In some embodiments, the second ground plate 22 may be a perforated base plate. Such a perforated base plate not only does not affect normal growth of grass on the second ground plate 24, but also prevents the moving assembly 11 from directly pressing grass roots and damaging the turf.

From the above, a length B of the first ground plate 22 in the longitudinal axis X direction of the body 10 is determined by a number of paths of the first paths where wheel tracks generated by the moving assembly 11 on the lawn do not overlap, and the length B increases as the number of paths increases. It can be seen that the greater the number of paths where wheel tracks do not overlap, the denser the movement paths in front of the docking station 2, and the longer the length of the dense path area in the X-axis direction. Therefore, the length B of the first ground plate 22 in the X-axis direction also needs to be longer. Correspondingly, a length b of the second ground plate 24 in the longitudinal axis X direction of the body 10 is determined by a number of paths of the transfer paths where wheel tracks generated by the moving assembly 11 on the lawn do not overlap, and the length b increases as the number of paths increases. It can be seen that the greater the number of paths where wheel tracks do not overlap, the denser the movement paths in front of the docking station 2, and the longer the length of the dense path area in the X-axis direction. Therefore, the length b of the second ground plate 24 in the X-axis direction also needs to be longer.

In some embodiments, a distance from the guidance position R to the opening 211 is greater than or equal to a distance from the positioning device 12 to a front side edge of the body 10 of the autonomous moving device 1 on the ground when the autonomous moving device 1 returns to the docking station 2. Thus, before entering the opening 211, the autonomous moving device 1 has sufficient space to adjust the pose at the guidance position R.

In some embodiments, the first ground plate 22 and the second ground plate 24 may be the same base plate that meets the requirements.

In a fourth aspect, to solve the above problem, the present application provides an autonomous moving device 1, including:
a moving assembly 11 configured to drive the autonomous moving device 1 to move on a ground;
a control device 15 configured to, in response to an exit command, control the moving assembly to move backward along a first sub-path of a first path, the first path further comprising a second sub-path, an end point of the first path being an end point of the second sub-path; in response to the autonomous moving device moving to an end point of the first sub-path, control the moving assembly to rotate at a second steering angle to cause the autonomous moving device to move backward along the second sub-path to leave a docking station; in response to the autonomous moving device moving to the end point of the first path, control the autonomous moving device to turn and then continue to move; or configured to: in response to a return command, control the autonomous moving device to travel to one of return transfer points, the return transfer points comprising a first transfer point and a second transfer point, a line of the first transfer point and the second transfer point forming an angle with a longitudinal axis direction of a body of the autonomous moving device when the autonomous moving device is docked at the docking station; in response to the autonomous moving device reaching the one of the return transfer points, control the autonomous moving device to return along a transfer path to a guidance position of the docking station, the return transfer point being a start point of the transfer path; in response to the autonomous moving device reaching the guidance position, control the autonomous moving device to enter the docking station along a docking path 143 and dock with the docking station, the guidance position being an end point of the transfer path and a start point of the docking path 143, respectively; and in response to the autonomous moving device successfully docking with the docking station, control the autonomous moving device to be docked at the docking station.

In a fifth aspect, to alleviate the above problem, the present application provides a docking station 2 for docking of the autonomous moving device 1. The docking station 2 includes:
a shelter 21, wherein when the autonomous moving device 1 is docked at the docking station 2, the shelter 21 covers the autonomous moving device 1 outside; the shelter 21 includes at least one side wall 210 and at least one opening 211 through which the autonomous moving device 1 enters and exits the docking station 2; a limit value of an angle between a path of entering and exiting the docking station 2 through the opening 211 and the longitudinal axis X direction of the body of the autonomous moving device 1 when the autonomous moving device 1 is docked at the docking station 2 is determined by a width of the body of the autonomous moving device 1 in the lateral axis Y direction and the at least one side wall 210 of the shelter 21 that restricts movement of the autonomous moving device 1 in the lateral axis Y direction of the body;
a first ground plate 22 disposed on a ground, wherein when the autonomous moving device 1 exits the docking station 2 through the opening 211, the moving assembly 11 runs over the first ground plate 22; a length of the first ground plate 22 in a direction of the autonomous moving device 1 entering and exiting the docking station 2 is determined by a number of paths where wheel tracks of the moving assembly 11 do not overlap, and the length increases as the number of paths increases; the wheel tracks of the moving assembly 11 are wheel tracks formed by the moving assembly 11 pressing the ground when the autonomous moving device 1 exits the docking station 2.

In a sixth aspect, to alleviate the above problem, the present application provides a docking station 2 for docking of the autonomous moving device 1. The autonomous moving device 1 further includes a positioning device 12 and a moving assembly 11. The positioning device 12 is configured to receive position data of the autonomous moving device 1. The docking station includes:
a guidance position R, wherein the autonomous moving device 1 docks with the docking station 2 in a substantially straight-line movement at the guidance position R; the moving assembly 11 includes at least one rear wheel, and the at least one rear wheel is a traveling wheel located at a rear side of the body 10 of the autonomous moving device 1 when the autonomous moving device 1 returns to the guidance position R;
a second ground plate 24 disposed on a ground, wherein when the autonomous moving device 1 returns to the guidance position R, the autonomous moving device 1 runs over the second ground plate 24; a distance from a contour edge of the second ground plate 24 in a direction away from the docking station 2 to the guidance position R on the ground is greater than or equal to a distance from the positioning device 12 to the at least one rear wheel on the ground.

In a seventh aspect, to alleviate the above problem, the present application provides a method for an autonomous moving device to exit a station. FIG. 17 is a flowchart of a method for an autonomous moving device to exit a station according to some embodiments of the present application. The method includes:
S300: in response to an exit command for the autonomous moving device, acquiring an environmental condition of a docking station.

Optionally, the environmental condition of the docking station 2 may be a positioning data quality parameter, whether the shelter 21 exists, and whether the docking station 2 is inside or outside a map boundary.

S302: determining a first preset path planning strategy according to the environmental condition.

Different path planning strategies may be used for different environmental conditions. For example, if the docking station 2 is located inside the map boundary and is open without obstruction, a large-angle direct exit may be planned; if the docking station 2 is located inside the map boundary but has the shelter 21, a small-angle direct random exit may be planned, or the autonomous moving device may first exit the shelter 21 and then perform a large-angle random exit; if the docking station 2 is located outside the boundary, the autonomous moving device may first exit the docking station 2, then plan to enter the boundary, and then take a random path for mowing.

S304: planning an exit path according to the first preset path planning strategy, the exit path under a current exit command being different from an exit path under a previous exit command.

For example, according to the determined path planning strategy, a specific exit path is planned, and specific control parameters are determined, so that the exit path is not unique each time.

S306: controlling the autonomous moving device to exit the station based on the exit path.

For example, according to the determined control parameters, the autonomous moving device such as a lawn mower is controlled to exit the station along a non-unique exit path, thereby avoiding forming wheel tracks on the lawn and improving the visual appearance of the lawn.

By acquiring the environmental condition of the docking station 2; determining a path planning strategy according to the environmental condition to plan a non-unique exit path; and controlling the autonomous moving device 1 to exit the station, the autonomous moving device can avoid forming wheel tracks on the lawn near the docking station 2, thereby improving the visual effect of the lawn.

Optionally, the autonomous moving device 1 includes a positioning device 12 for receiving positioning data; the environmental condition includes that a data quality parameter of the position data of the autonomous moving device 1 received by the positioning device 12 is above a preset value or below the preset value.

Optionally, when the environmental condition includes that the data quality parameter of the position data is above the preset value, the exit path includes at least one segment of a random path.

Optionally, the docking station 2 includes a second charging terminal 23, and the autonomous moving device 1 includes a first charging terminal 19 disposed on the body 10. During charging of the autonomous moving device 1 by the docking station 2, the first charging terminal 19 is docked with the second charging terminal 23. The first preset path planning strategy includes controlling the autonomous moving device 1 to exit the station directly via a random path; an angle between a starting tangent of the random path and the axis X of the body 10 of the autonomous moving device 1 when the autonomous moving device 1 is docked at the docking station 2 is limited to a first preset angle range.

For example, when the docking station 2 is located inside the map boundary and is open without obstruction, a large-angle direct exit may be planned. FIG. 13 is a second schematic diagram of a path of the autonomous moving device exiting the station according to some embodiments of the present application.

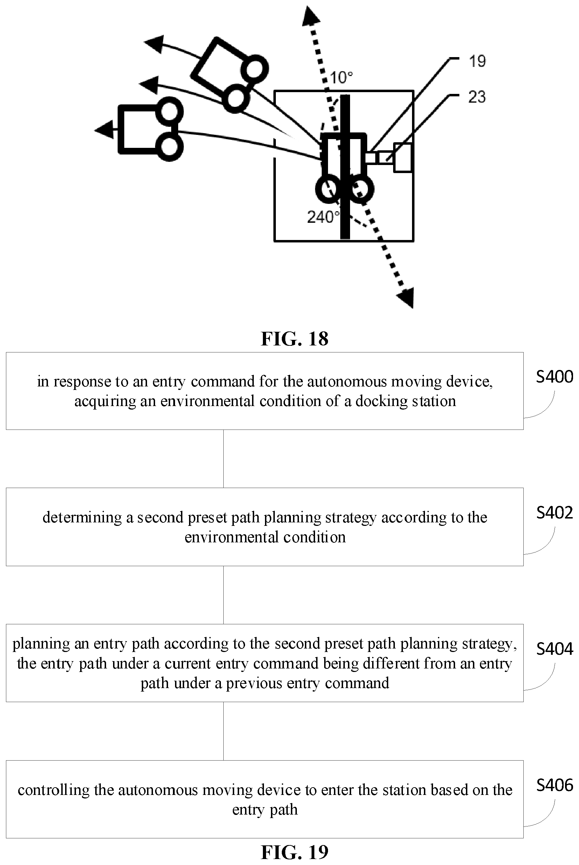

As shown in the second schematic diagram of a path of the autonomous moving device exiting the station in FIG. 18, when the docking station 2 is inside the boundary, open, and not constrained by the shelter 21, the autonomous moving device 1 exits the station along a random path within a large angle range biased toward the side without the second charging terminal 23, solving the problem of grass grinding and wheel track formation.

Please also refer to FIGS. 5 and 13. For example, the autonomous moving device 1 may adopt front charging (the first charging terminal 19 at the autonomous moving device 1 end is disposed at a front end of the autonomous moving device 1, and when docking with the docking station 2, the head faces the second charging terminal 23 on the docking station 2), side charging (the first charging terminal 19 is disposed on a side of the autonomous moving device 1, and when docking with the docking station 2, the side faces the second charging terminal 23 on the docking station 2), or rear charging (the first charging terminal 19 is disposed at a rear end of the autonomous moving device 1, and when docking with the docking station 2, the tail faces the second charging terminal 23). Optionally, if the autonomous moving device 1 is front-charged, it may first move backward a suitable distance, and then perform the exiting operation.

Optionally, as shown in FIG. 13, when the autonomous moving device 1 is side-charged, with the longitudinal axis X of the body 10 of the autonomous moving device 1 when the autonomous moving device 1 is docked at the docking station 2 being a 0 reference line, and with a direction away from the second charging terminal being a positive direction, the first preset angle range has a value range of 10°, 240°.

Please continue to refer to FIG. 13. Considering the positional limitation of the docking station 2, when planning the exit path, a starting tangent angle of a fitted arc may be controlled to be any angle within the range of (10° to 240°). Exiting the station within this angle range prevents the autonomous moving device 1 from colliding with the second charging terminal 23.

Optionally, the environmental condition includes that the docking station 2 includes the shelter 21; with the longitudinal axis X of the body 10 of the autonomous moving device 1 when the autonomous moving device 1 is docked at the docking station 2 being a 0 reference line, and with a direction away from the docking station 2 being a positive direction, the first preset angle range has a value range of -10°, 10°.

For example, considering the positional limitation of the shelter 21, when planning the exit path, a starting tangent angle of a fitted arc may be controlled to be any angle within the range of (-10° to 10°). Exiting the station within this angle range prevents the autonomous moving device 1 from colliding with the shelter 21.

Optionally, the docking station 2 is determined to include the shelter 21 by at least one of the following three manners: detecting the shelter 21 through a non-contact obstacle detection sensor, detecting the shelter 21 through a contact obstacle detection sensor, and determining the shelter 21 through preset shelter 21 information.

For example, a non-contact obstacle sensor such as a radar or an ultrasonic sensor can detect the presence of an obstacle at a certain distance from the obstacle. For example, a contact sensor such as a pressure sensor can sense the presence of an obstacle when touching it. For example, the autonomous moving device 1 may also pre-store information about the shelter 21 in the working area so that the autonomous moving device 1 can read it, thereby obtaining information about the existence of the shelter 21.

Optionally, the docking station 2 includes the guidance module 20 disposed nearby; when the environmental condition includes that the data quality parameter of the position data is below the preset value, the autonomous moving device 1 is controlled to determine its own position according to the guidance module 20, and the exit path includes at least one segment of a path located near the guidance module 20.

Optionally, with the axis X of the body 10 of the autonomous moving device 1 when the autonomous moving device 1 is docked at the docking station 2 being a 0 reference line, and with a direction away from the docking station 2 being a positive direction, the path located near the guidance module 20 includes at least one segment of a path, and an angle between a starting tangent of the path and the axis X of the body 10 of the autonomous moving device 1 when the autonomous moving device 1 is docked at the docking station 2 is limited to -10°, 10°.

For example, considering the limitation that the satellite positioning signal is too weak to perform normal positioning, when planning the exit path, to avoid moving away from the guide signal of the guidance module 20, a starting tangent angle of a fitted arc may be controlled to be any angle within the range of (-10° to 10°). Exiting the station within this angle range prevents the autonomous moving device 1 from moving away from the guidance module 20, thereby preventing the autonomous moving device 1 from encountering unknown dangers and being unable to return to the docking station 2.

Optionally, the path located near the guidance module 20 includes at least one segment of a path offset from the guidance module 20 by a preset distance. Optionally, the path located near the guidance module 20 includes at least one segment of a path along the guidance module 20 for a preset length, to ensure that the autonomous moving device 1 does not move away from the guidance module 20, thereby preventing collision with unknown obstacles.

For example, to prevent the autonomous moving device 1 from repeatedly running over the lawn on the preset length path along the guidance module 20 and forming grass-grinding wheel track marks, the traveling path may be finely adjusted so that the path along the guidance module 20 for the preset length is offset by a preset distance each time, to maintain growth of the turf on the preset length path.

Optionally, a starting path of the exit path is the path along the guidance module 20 for the preset length.

For example, considering the limitation that the satellite positioning signal is too weak to perform normal positioning, when planning the exit path, to avoid moving away from the guide signal of the guidance module 20, the autonomous moving device 1 may be controlled to travel for a preset length along the guide signal of the guidance module 20 in the starting path.

Optionally, a region where the preset length is located is provided with a perforated base plate.

For example, the preset length path near the docking station 2 may be provided with a perforated base plate, and a short magnetic strip may be installed on or under the base plate, so that the turf grass can grow through the perforations, and the base plate also prevents the mower wheels from grinding the grass.

Optionally, the preset distance is greater than the one-side wheel width d of the autonomous moving device 1.

For example, to prevent the autonomous moving device 1 from repeatedly running over the lawn on the preset length path along the guidance module 20 and forming grass-grinding wheel track marks, the traveling path may be finely adjusted so that the path along the guidance module 20 for the preset length is offset by a preset distance each time, to maintain growth of the turf on the preset length path. The transverse fine adjustment distance may be greater than the one-side wheel width d of the autonomous moving device 1, so that the wheel tracks of the autonomous moving device 1 do not press the same path each time.

Optionally, the guidance module 20 includes a magnetic strip, and the autonomous moving device 1 includes a magnetic signal detection sensor; the autonomous moving device 1 determines a relative position between the autonomous moving device and the magnetic strip according to a magnetic signal detected by the magnetic signal detection sensor, to determine its own position.

For example, considering the limitation that the satellite positioning signal is too weak to perform normal positioning, to facilitate docking of the autonomous moving device 1 with the docking station 2, a magnetic strip is often provided at a position in front of the docking station 2, and correspondingly, the autonomous moving device 1 includes a magnetic sensor capable of detecting a magnetic signal, for detecting the magnetic signal. Through the strength of the magnetic signal, the relative positional relationship between the autonomous moving device 1 and the magnetic strip can be controlled, thereby controlling the autonomous moving device 1 to leave the docking station 2 along the magnetic strip.

Optionally, the environmental condition includes that a position of the docking station 2 is inside or outside a working map boundary of the autonomous moving device 1.

Before the autonomous moving device 1 performs a mowing task on the lawn, a mapping device is controlled to first establish a virtual boundary along the lawn boundary, and then the autonomous moving device 1 uses the map and the positioning device 12 and the navigation device 16 to work within the boundary. The mapping device may be a specially provided mapping device or the autonomous moving device 1 itself. The position of the docking station 2 may be set inside the boundary or outside the boundary. For different positions of the docking station 2, different planning strategies need to be selected for path planning. Optionally, a current position of the autonomous moving device 1 is acquired, and a positional relationship between the autonomous moving device 1 and the working map boundary is determined; whether the position of the docking station 2 is inside or outside the boundary is determined according to the positional relationship. For example, the position of the docking station 2 may be set inside the working map boundary or outside the boundary. When planning a path, it may be determined according to the relationship between the marked position of the docking station 2 and the working map boundary. If the position of the docking station 2 is within a range enclosed by the working map boundary, then it is inside the boundary; otherwise, it is outside the boundary.

Optionally, the docking station 2 includes the guidance module 20; when the environmental condition includes that the position of the docking station 2 is outside the working map boundary of the autonomous moving device 1, the exit strategy includes controlling the autonomous moving device 1 to determine its own position according to the guidance module 20, and to leave the docking station 2 along a first random path, enter the boundary along a second random path, and end exiting along a third random path; wherein: the first random path is a path of moving backward for a random distance; the second random path includes at least one segment of a path located near the guidance module 20; and the third random path includes at least one segment of a path of randomly drawing an arc. As shown in FIG. 7, in some embodiments, since the docking station 2 is disposed outside the boundary, when exiting the station, the autonomous moving device 1 first needs to exit the docking station 2 along the first random path, then enter the working map boundary along the second random path, and finally go to work along the third random path. For example, the first random path may be a backward random distance to exit the docking station 2. The second random path may be a path offset from the docking station 2 by a random distance for a random length. The third random path may be a random arc for traveling to the working area.

In an eighth aspect, the present application further provides a method for an autonomous moving device to enter a station. FIG. 19 is a flowchart of a method for an autonomous moving device to enter a station according to some embodiments of the present application. The method includes:
S400: in response to an entry command for the autonomous moving device, acquiring an environmental condition of a docking station.

The environmental condition of the docking station 2 is as described above.

S402: determining a second preset path planning strategy according to the environmental condition.

Different path planning strategies may be used for different environmental conditions. For example, if the docking station 2 is located inside the map boundary and is open without obstruction, a large-angle direct entry may be planned; if the docking station 2 is located inside the map boundary but has the shelter 21, a small-angle direct random path entry may be planned, or the autonomous moving device may first make a large-angle random travel to the vicinity of the shelter 21, and then enter the shelter 21 at a small angle. If the docking station 2 is located outside the boundary, the autonomous moving device may first randomly draw an arc to a guide area, then follow the guide area to the vicinity of the docking station 2, and finally enter the docking station 2 for charging.

S404: planning an entry path according to the second preset path planning strategy, the entry path under a current entry command being different from an entry path under a previous entry command.

For example, according to the determined path planning strategy, a specific entry path is planned, and specific control parameters are determined, so that the entry path is not unique each time.

S406: controlling the autonomous moving device to enter the station based on the entry path.

For example, according to the determined control parameters, the autonomous moving device 1 is controlled to enter the station along a non-unique entry path, thereby avoiding forming wheel tracks on the lawn and improving the visual appearance of the lawn.

By acquiring the environmental condition of the docking station 2; determining a path planning strategy according to the environmental condition to plan a non-unique entry path; and controlling the autonomous moving device 1 to enter the station, the autonomous moving device can avoid forming wheel tracks on the lawn near the docking station 2, thereby improving the visual effect of the lawn.

Optionally, the autonomous moving device 1 includes a positioning device 12 for receiving positioning data; the environmental condition includes that a data quality parameter of the position data of the autonomous moving device 1 received by the positioning device 12 is above a preset value or below the preset value. Optionally, when the environmental condition includes that the data quality parameter of the position data is above the preset value, the entry path includes at least one segment of a random path.

Optionally, a start point of the at least one random path is any point, and an end point of the random path is the guidance position R as described above.

For example, when the docking station 2 is located inside the map boundary and is open without obstruction, one or more segments of random paths may be directly planned for the entry path of the autonomous moving device 1 to directly enter the station for charging, thereby avoiding forming grass-grinding wheel tracks on the lawn.

Optionally, the docking station 2 includes a second charging terminal 23, and the autonomous moving device 1 includes a first charging terminal 19 disposed on the body 10. During charging of the autonomous moving device 1 by the docking station 2, the first charging terminal 19 is docked with the second charging terminal 23. The second preset path planning strategy includes that the entry path of the autonomous moving device 1 includes at least one segment of a random path, and an end point of the random path is near the longitudinal axis of the body X of the autonomous moving device 1 when the autonomous moving device 1 is docked at the docking station 2.

For example, when the docking station 2 is located inside the map boundary and is open without obstruction, a large-angle direct entry may be planned.

As shown in FIG. 9, when the docking station 2 is inside the boundary, open, and not constrained by the shelter 21, the autonomous moving device 1 may enter the station along a random path within a large angle range biased toward the side without the second charging terminal 23, solving the problem of grass grinding and wheel track formation. Optionally, at this time, the autonomous moving device 1 may be side-charged or rear-charged.

Optionally, the environmental condition includes that the docking station 2 includes the shelter 21, and the manner of determining the shelter 21 is as described above.

Optionally, the docking station 2 includes the guidance module 20 disposed near the docking station 2. When the environmental condition includes that the data quality parameter of the position data is below the preset value, the autonomous moving device 1 is controlled to determine its own position according to the guidance module 20, and the entry path further includes at least one segment of a path located near the guidance module 20.

For example, considering the limitation that the satellite positioning signal is too weak to perform normal positioning, to facilitate docking of the autonomous moving device 1 with the docking station 2, the guidance module 20 is often provided at a position in front of the docking station 2, and correspondingly, the autonomous moving device 1 includes a device capable of detecting a guide signal emitted by the guidance module 20. Through the strength of the guide signal, the relative positional relationship between the autonomous moving device 1 and the guidance module 20 can be controlled, thereby controlling the autonomous moving device 1 to enter and exit the docking station 2 along the guidance module 20.

Optionally, with the longitudinal axis of the body X of the autonomous moving device 1 when the autonomous moving device 1 is docked at the docking station 2 being a 0 reference line, and with a direction away from the docking station 2 being a positive direction, the path located near the guidance module 20 includes at least one segment of a path, and an angle between a final tangent of the path and the longitudinal axis of the body X of the autonomous moving device 1 when the autonomous moving device 1 is docked at the docking station 2 is limited to -10°, 10°.

For example, considering the limitation that the satellite positioning signal is too weak to perform normal positioning, when planning the entry path, to avoid moving away from the guide signal of the guidance module 20, a final tangent angle of a fitted arc may be controlled to be any angle within the range of (-10° to 10°). Entering the station within this angle range prevents the autonomous moving device 1 from moving away from the guidance module 20, thereby preventing encountering unknown dangers.

Optionally, the path located near the guidance module 20 includes at least one segment of a path offset from the guidance module 20 by a preset distance.

For example, to prevent the autonomous moving device 1 from repeatedly running over the lawn on the preset length path along the guidance module 20 and forming grass-grinding wheel track marks, the traveling path may be finely adjusted so that the path along the guidance module 20 for the preset length is offset by a preset distance each time, to maintain growth of the turf on the preset length path.

Optionally, the path located near the guidance module 20 includes at least one segment of a path along the guidance module 20 for a preset length. Optionally, a final path of the entry path is the path along the guidance module 20 for the preset length.

For example, considering the limitation that the satellite positioning signal is too weak to perform normal positioning, when planning the entry path, to avoid moving away from the guide signal of the guidance module 20, the autonomous moving device 20 may be controlled to travel for a preset length along the guide signal of the guidance module 20 in the final path, to ensure that the autonomous moving device 1 does not move away from the guidance module 20.

Optionally, a region where the preset length is located is provided with a perforated base plate.

For example, the preset length path of the docking station 2 may be provided with a perforated base plate, and a short magnetic strip may be installed on or under the base plate, so that the turf grass can grow through the perforations, and the base plate also prevents the mower wheels from grinding the grass.

Optionally, the preset distance is greater than the one-side wheel width of the autonomous moving device 1. For example, to prevent the autonomous moving device 1 from repeatedly running over the lawn on the preset length path along the guidance module 20 and forming grass-grinding wheel track marks, the traveling path may be finely adjusted so that the path along the guidance module for the preset length is offset by a preset distance each time, to maintain growth of the turf on the preset length path. The transverse fine adjustment distance may be greater than the one-side wheel width d, so that the wheel tracks of the autonomous moving device 1 do not press the same path each time.

Optionally, the guidance module 20 includes a magnetic strip, and the autonomous moving device 1 includes a magnetic signal detection sensor; the autonomous moving device 1 determines a relative position between the autonomous moving device and the magnetic strip according to a magnetic signal detected by the magnetic signal detection sensor, to determine its own position. Through the strength of the magnetic signal, the relative positional relationship between the autonomous moving device 1 and the magnetic strip can be controlled, thereby controlling the autonomous moving device 1 to return to the docking station 2 along the magnetic strip.

Optionally, the environmental condition includes that the position of the docking station 2 is inside or outside the working map boundary of the autonomous moving device 1. The manner of determining the position of the docking station 2 is as described above. Optionally, when the environmental condition includes that the position of the docking station 2 is outside the working map boundary of the autonomous moving device 1, the entry strategy includes controlling the autonomous moving device 1 to determine its own position according to the guidance module 20, and to travel along a fourth random path to a vicinity of the guidance module 20, travel out of the working map boundary along a fifth random path, and end entering along a sixth random path; wherein: the fourth random path includes at least one segment of a path of randomly drawing an arc; the fifth random path includes at least one segment of a path located near the guidance module 20; and the sixth random path is a path to a guidance position R for charging docking with the docking station 2. As shown in FIG. 15, when the docking station 2 is outside the boundary or in a shaded area inside the boundary, the autonomous moving device 1 returns to enter the station, and may select a preview strategy with multiple preset points, then travel along the magnetic strip with a variable compensation distance, and finally enter the station along the magnetic strip, solving the grass grinding problem. In some embodiments, since the docking station 2 is disposed outside the boundary, when entering the station, the autonomous moving device 1 first randomly draws an arc along the fourth random path to travel to the vicinity of the guidance module 20, then travels along the fifth random path offset from the guidance module 20 by a random distance to outside the boundary, and finally returns to the guidance position R along the sixth random path.

Optionally, a plurality of preset points are preset within the working map boundary, and the plurality of preset points are a plurality of start points of the second random path; the second preset path planning strategy includes controlling the autonomous moving device 1 to reach a selected preset point via the fourth random path.

Please continue to refer to FIG. 15. For example, when the docking station 2 is outside the boundary or in a shaded area inside the boundary, a certain preset point among the plurality of preset points is selected. At this time, the autonomous moving device 1 may first travel along a random path, such as randomly drawing an arc, to the entry preset point. Then, it travels along an arc to the preset point, in preparation for traveling along a fitted path to the vicinity of the station.

Optionally, the first random path includes: with the selected preset point as a point on an arc, calculating a target arc with a random radius and a random center; controlling the autonomous moving device 1 to first move to any point on the target arc, so that the autonomous moving device 1 can travel to the target preset point along the target arc.

Please continue to refer to FIG. 15. For example, with the selected preset point as any point on an arc, a circle is drawn with a random radius and a random center, and the autonomous moving device 1 first reaches any point on the circle as a preview relay point. At this time, the autonomous moving device 1 may first return to any point on the variable-radius circle selected as the relay point. After the autonomous moving device 1 reaches the return preview relay point, it previews the entry preset point. Then, it travels along the arc to the preset point, in preparation for traveling along the fitted path to the vicinity of the station. Optionally, the selected preset point is located on the path along the guidance module 20 for the preset length. Please continue to refer to FIG. 15. For example, the preset point is located on the path along the guidance module 20 for the preset length, so that the autonomous moving device 1 can detect the guide signal emitted by the guidance module 20, thereby traveling for the preset length and reaching the docking station 2.

In a ninth aspect, the present application further provides an autonomous moving device 1, including:
a moving assembly 11 supporting and driving the autonomous moving device 1 to travel, the moving assembly 11 including traveling wheels;
a control device 15 configured to control movement and work of the autonomous moving device 1; and
an environmental detection device 20 configured to detect an environmental condition, so that the control device 15 executes the method for the autonomous moving device 1 to exit the station as described above, and/or executes the method for the autonomous moving device 1 to enter the station as described above.

It can be understood that the above scenarios are only examples and do not limit the application scenarios of the technical solutions provided by the embodiments of the present application. The technical solutions of the present application may also be applied to other scenarios. For example, those of ordinary skill in the art will appreciate that, as system architecture evolves and new business scenarios emerge, the technical solutions provided by the embodiments of the present application are equally applicable to similar technical problems.

The numbering of the embodiments of the present application is for description only and does not represent the advantages or disadvantages of the embodiments.

The steps in the methods of the embodiments of the present application may be reordered, combined, or deleted as needed.

The units in the devices of the embodiments of the present application may be combined, divided, or deleted as needed.

In the present application, for the same or similar terms, concepts, technical solutions, and/or application scenario descriptions, detailed descriptions are generally given only at the first occurrence. For the sake of brevity, repeated descriptions are generally omitted for subsequent occurrences. When understanding the technical solutions of the present application, reference may be made to the previous relevant detailed descriptions for the same or similar terms, concepts, technical solutions, and/or application scenario descriptions that are not described in detail later.

In the present application, each embodiment is described with its own emphasis. For parts not described in detail or recorded in a certain embodiment, reference may be made to the relevant descriptions of other embodiments.

The technical features of the technical solutions of the present application may be combined arbitrarily. To keep the description concise, not all possible combinations of the technical features in the above embodiments are described. However, as long as there is no contradiction in the combinations of these technical features, they should be considered as falling within the scope of the present disclosure.

The above are only preferred embodiments of the present application and are not intended to limit the patent scope of the present application. Any equivalent structure or equivalent process transformation made using the specification and accompanying drawings of the present application, or direct or indirect application in other related technical fields, shall also be included in the patent protection scope of the present application.

## Claims

1. A method for an autonomous moving device to exit a docking station, the autonomous moving device comprising a moving assembly, wherein the method comprises:
in response to an exit command, controlling the moving assembly to rotate at a first steering angle to cause the autonomous moving device to move backward along a first path to leave the docking station; the first path under a current exit command being different from the first path under a previous exit command;
and in response to the autonomous moving device moving backward to an end point of the first path, controlling the autonomous moving device to turn and then continue to move.

2. A method for an autonomous moving device to exit a docking station, the autonomous moving device comprising a moving assembly, comprising:
in response to an exit command, controlling the moving assembly to move backward along a first sub-path of a first path, the first path further comprising a second sub-path, an end point of the first path being an end point of the second sub-path;
in response to the autonomous moving device moving to an end point of the first sub-path, controlling the moving assembly to rotate at a second steering angle to cause the autonomous moving device to move backward along the second sub-path to leave the docking station;
and in response to the autonomous moving device moving to the end point of the first path, controlling the autonomous moving device to turn and then continue to move.

3. The method for an autonomous moving device to exit a docking station according to claim 1, wherein the first path is an arc-shaped path having a first radius of curvature, the arc-shaped path being formed by the autonomous moving device moving backward while maintaining the first steering angle.

4. The method for an autonomous moving device to exit a docking station according to claim 2, wherein the second sub-path is an arc-shaped path having a second radius of curvature, the arc-shaped path being formed by the autonomous moving device moving backward while maintaining the second steering angle.

5. The method for an autonomous moving device to exit a docking station according to claim 2 or 4, wherein the controlling the moving assembly to move backward along the first sub-path comprises:
controlling the moving assembly to rotate at a third steering angle to cause the autonomous moving device to move backward along the first sub-path to leave the docking station, wherein the third steering angle is smaller than the second steering angle.

6. The method for an autonomous moving device to exit a docking station according to claim 5, wherein the first sub-path is an arc-shaped path having a third radius of curvature, the arc-shaped path being formed by the autonomous moving device moving backward while maintaining the third steering angle.

7. The method for an autonomous moving device to exit a docking station according to claim 1 or 2, wherein a length of the first path is less than or equal to a product of a backward speed and a backward time threshold.

8. The method for an autonomous moving device to exit a docking station according to claim 1 or 2, wherein the moving assembly comprises traveling wheels disposed on two sides of a body of the autonomous moving device, and a distance between the end point of the first path under the current exit command and the end point of the first path under the previous exit command is greater than or equal to a wheel width of a traveling wheel located on one side of the body of the autonomous moving device.

9. The method for an autonomous moving device to exit a docking station according to claim 8, wherein the docking station comprises a shelter, and when the autonomous moving device is docked at the docking station, the shelter covers the autonomous moving device; the shelter comprises at least one side wall and at least one opening through which the autonomous moving device enters and exits the docking station; and a limit value of an angle between the first path and a longitudinal axis direction of the body of the autonomous moving device when the autonomous moving device is docked at the docking station is determined by a width of the body of the autonomous moving device in a lateral axis direction and the at least one side wall of the shelter that restricts movement of the autonomous moving device in the lateral axis direction of the body.

10. The method for an autonomous moving device to exit a docking station according to claim 8, wherein the docking station comprises a first ground plate disposed outside the shelter, the first ground plate being disposed on a ground near an opening, and when the autonomous moving device exits the docking station through the opening, the moving assembly runs over the first ground plate.

11. The method for an autonomous moving device to exit a docking station according to claim 8, wherein the controlling the autonomous moving device to turn and then continue to move comprises:
acquiring a start point of a target working path of the autonomous moving device;
determining a preset direction according to the end point of the first path and the start point of the target working path;
controlling the autonomous moving device to turn; and
in response to the autonomous moving device facing the preset direction, controlling the autonomous moving device to move toward the start point of the target working path.

12. The method for an autonomous moving device to exit a docking station according to claim 8, wherein the controlling the autonomous moving device to turn and then continue to move comprises:
controlling the autonomous moving device to rotate the body; and
in response to the autonomous moving device facing an exit direction of a preset guidance path, controlling the autonomous moving device to move away from the docking station along the preset guidance path or along a path spaced apart from the preset guidance path by a preset distance; a path along which the autonomous moving device moves away from the docking station under the current exit command being different from a path along which the autonomous moving device moves away from the docking station under the previous exit command.

13. The method for an autonomous moving device to exit a docking station according to claim 12, wherein a distance between at least a portion of the path along which the autonomous moving device moves away from the docking station under the current exit command and at least a portion of the path along which the autonomous moving device moves away from the docking station under the previous exit command is greater than or equal to the one-side wheel width.

14. The method for an autonomous moving device to exit a docking station according to claim 12, wherein the autonomous moving device comprises a positioning device configured to receive position data of the autonomous moving device; the autonomous moving device comprises a storage device storing at least part of position data of the preset guidance path; and
the controlling the autonomous moving device to turn and then continue to move further comprises:
controlling the autonomous moving device to follow a distance of the preset guidance path according to the at least part of the position data of the preset guidance path and the position data of the autonomous moving device received by the positioning device.

15. The method for an autonomous moving device to exit a docking station according to any one of claims 12 to 14, wherein the docking station comprises a guidance module, the autonomous moving device comprises a sensing device capable of sensing the guidance module, and the preset guidance path is a movement path of the autonomous moving device when the guidance module guides the autonomous moving device to exit the docking station.

16. The method for an autonomous moving device to exit a docking station according to claim 15, wherein the guidance module comprises a magnetic strip disposed near the docking station, the sensing device comprises a magnetic signal detection sensor, and the preset guidance path comprises at least one segment of a movement path along which the autonomous moving device senses the magnetic strip through the magnetic signal detection sensor and moves along the magnetic strip.

17. A method for an autonomous moving device to return to a docking station, comprising:
in response to a return command, controlling the autonomous moving device to travel to one of return transfer points, the return transfer points comprising a first transfer point and a second transfer point, a line of the first transfer point and the second transfer point forming an angle with a longitudinal axis direction of a body of the autonomous moving device when the autonomous moving device is docked at the docking station;
in response to the autonomous moving device reaching the one of the return transfer points, controlling the autonomous moving device to return along a transfer path to a guidance position of the docking station, the return transfer point being a start point of the transfer path;
in response to the autonomous moving device reaching the guidance position, controlling the autonomous moving device to enter the docking station along a docking path and dock with the docking station, the guidance position being an end point of the transfer path and a start point of the docking path, respectively;
and in response to the autonomous moving device successfully docking with the docking station, controlling the autonomous moving device to be at a docking position.

18. The method for an autonomous moving device to return to a docking station according to claim 17, further comprising:
controlling the autonomous moving device, based on a first navigation signal, to travel to the return transfer point;
controlling the autonomous moving device, based on the first navigation signal, to return along the transfer path to the guidance position of the docking station; and
controlling the autonomous moving device, based on a second navigation signal, to enter the docking station along the docking path and dock with the docking station;
wherein the first navigation signal is different from the second navigation signal.

19. The method for an autonomous moving device to return to a docking station according to claim 17 or 18, wherein at least two transfer paths are provided between the first transfer point and the guidance position, the at least two transfer paths having preset curvature radii, and the at least two transfer paths do not overlap with each other.

20. The method for an autonomous moving device to return to a docking station according to any one of claims 17 to 19, wherein an angle between a line from the first transfer point to the guidance position and an orientation of the autonomous moving device at the docking position is less than 90°.

21. The method for an autonomous moving device to return to a docking station according to any one of claims 17 to 20, wherein, before the controlling the autonomous moving device to travel to one of the return transfer points, the method comprises:
selecting, from the first transfer point and the second transfer point, a point having a consecutive selection count lower than a transfer threshold as the return transfer point.

22. The method for an autonomous moving device to return to a docking station according to any one of claims 17 to 21, wherein the autonomous moving device further comprises a moving assembly, the moving assembly comprising at least one rear wheel; and the method further comprises:
a distance between the first transfer point and the second transfer point being greater than a wheel width of the rear wheel.

23. The method for an autonomous moving device to return to a docking station according to any one of claims 17 to 22, wherein the controlling, in response to the autonomous moving device reaching the guidance position, the autonomous moving device to enter the docking station along the docking path and dock with the docking station comprises:
before or after the autonomous moving device reaches the guidance position, controlling the autonomous moving device to adjust a pose along the docking path so that the autonomous moving device enters the docking station in a substantially straight-line movement and docks with the docking station; the docking station comprising a second ground plate disposed near the guidance position, and when the autonomous moving device enters the docking station along the docking path, the autonomous moving device runs over the second ground plate.

24. The method for an autonomous moving device to return to a docking station according to claim 23, wherein the autonomous moving device further comprises a moving assembly, the moving assembly comprising at least one rear wheel, and the at least one rear wheel is a traveling wheel located at a rear side of a body of the autonomous moving device when the autonomous moving device returns to the guidance position; and
when the autonomous moving device is at the guidance position, the rear wheel of the autonomous moving device is on the second ground plate.

25. The method for an autonomous moving device to return to a docking station according to claim 24, wherein the autonomous moving device further comprises a positioning device configured to receive position data of the autonomous moving device; and a distance from a contour edge of the second ground plate in a direction away from the docking station to the guidance position on a ground is greater than or equal to a distance from the positioning device to the at least one rear wheel on the ground.

26. The method for an autonomous moving device to return to a docking station according to any one of claims 17 to 25, wherein the docking station comprises a guidance module, the autonomous moving device comprises a sensing device capable of sensing the guidance module, and the docking path is a movement path of the autonomous moving device when the guidance module guides the autonomous moving device to enter the docking station.

27. The method for an autonomous moving device to return to a docking station according to claim 26, wherein the guidance module comprises a magnetic strip disposed on a ground, the sensing device comprises a magnetic signal detection sensor, and the docking path comprises at least one segment of a movement path along which the autonomous moving device senses the magnetic strip through the magnetic signal detection sensor and moves along the magnetic strip.

28. The method for an autonomous moving device to return to a docking station according to claim 22, wherein a length of the second ground plate is less than or equal to a length of the docking station, and a direction of the length is a direction in which the autonomous moving device enters the docking station.

29. The method for an autonomous moving device to return to a docking station according to claim 22, wherein the second ground plate is movably connected to the docking station.

30. An autonomous moving device, comprising:
a moving assembly configured to drive the autonomous moving device to move on a ground;
a control device configured to, in response to an exit command, control the moving assembly to move backward along a first sub-path of a first path, the first path further comprising a second sub-path, an end point of the first path being an end point of the second sub-path; in response to the autonomous moving device moving to an end point of the first sub-path, control the moving assembly to rotate at a second steering angle to cause the autonomous moving device to move backward along the second sub-path to leave a docking station; in response to the autonomous moving device moving to the end point of the first path, control the autonomous moving device to turn and then continue to move; or configured to: in response to a return command, control the autonomous moving device to travel to one of return transfer points, the return transfer points comprising a first transfer point and a second transfer point, a line of the first transfer point and the second transfer point forming an angle with a longitudinal axis direction of a body of the autonomous moving device when the autonomous moving device is docked at the docking station; in response to the autonomous moving device reaching the one of the return transfer points, control the autonomous moving device to return along a transfer path to a guidance position of the docking station, the return transfer point being a start point of the transfer path; in response to the autonomous moving device reaching the guidance position, control the autonomous moving device to enter the docking station along a docking path and dock with the docking station, the guidance position being an end point of the transfer path and a start point of the docking path, respectively; and in response to the autonomous moving device successfully docking with the docking station, control the autonomous moving device to be docked at the docking station.
